# EUROPEAN PATENT APPLICATION

(11) **EP 4 539 519 A1**
(43) Date of publication of application: **16.04.2025**
(21) Application number: 23830076.8
(22) Date of filing: 21.06.2023
(51) Int. Cl.: H04W 8/18

(54) **COMMUNICATION METHOD AND APPARATUS**

(30) Priority: 27.06.2022 CN 202210743668
(71) Applicant: Huawei Technologies Co., Ltd., Shenzhen, Guangdong 518129 (CN)
(72) Inventor: HU, Li, Shenzhen, Guangdong 518129 (CN); WU, Rong, Shenzhen, Guangdong 518129 (CN)
(74) Representative: Isarpatent
(86) International application number: PCT/CN2023/101620
(87) International publication number: WO 2024/001897

(57) **Abstract**

This application provides a communication method and apparatus. The method includes: An access network device obtains a data processing requirement indicating a requirement for processing data associated with a user for a specified purpose. The access network device determines, based on user consent information and the data processing requirement, whether to process the data associated with the user for the specified purpose, where the user consent information indicates whether the user consents to process the data associated with the user for a plurality of data processing purposes, and any one of the plurality of data processing purposes indicates a purpose of processing the data associated with the user. In the solutions, the access network device determines, based on the user consent information and the data processing requirement, whether to process the data associated with the user for the specified purpose, so that the access network device checks user consent before collecting the data associated with the user, thereby improving security of the data associated with the user.

## Description

This application claims priority to Chinese Patent Application No. 202210743668.X, filed with the China National Intellectual Property Administration on June 27, 2022 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

Currently, laws (such as the *Personal Information Protection Act* and general data protection regulation (general data protection regulation, GDPR)) that protect personal information impose requirements on how to protect personal information. The requirements include but are not limited to: A data controller (for example, an enterprise or an operator network) needs to obtain user consent before processing personal information. Specifically, before processing personal information, the data controller needs to obtain user consent for a data processing purpose.

It should be understood that the operator network is also the data controller for a subscriber of the operator network. Therefore, before collecting user data to perform operations for some specific purposes, the operator network also needs to obtain user consent. The operator network includes a base station and a core network device. No related user consent check procedure is provided currently when the base station collects the user data.

### SUMMARY

Embodiments of this application provide a communication method, to provide a procedure in which a base station checks user consent based on user consent information and a data processing requirement, thereby improving security of data associated with a user.

According to a first aspect, a communication method is provided. The method may be performed by a first access network device, or may be performed by a component (for example, a chip or a circuit) of a first access network device. This is not limited. For ease of description, an example in which the method is performed by the first access network device is used below for description.

The communication method includes: The first access network device obtains a data processing requirement, where the data processing requirement indicates a requirement for processing data associated with a user for a specified purpose. The first access network device determines, based on user consent information and the data processing requirement, whether to process the data associated with the user for the specified purpose, where the user consent information indicates whether the user consents to process the data associated with the user for a plurality of specified data processing purposes, and any one of the plurality of data processing purposes indicates a purpose of processing the data associated with the user.

For ease of differentiation, the user consent information obtained by the first access network device may be referred to as first user consent information below.

According to the foregoing technical solution, after obtaining the data processing requirement, the first access network device can learn of the specified purpose for which the data associated with the user is currently processed, and the first access network device may determine, based on the user consent information and the data processing requirement, whether to process the data associated with the user for the specified purpose. That is, the first access network device determines, by checking user consent, whether to process the data associated with the user for the specified purpose, instead of directly processing the data associated with the user for the specified purpose, thereby improving security of the data associated with the user.

In addition, the user consent information indicates whether the user consents to process the data associated with the user for the plurality of specified data processing purposes. That is, when learning of the user consent information, the first access network device may determine, based on the user consent information, whether to process the data associated with the user for the plurality of data processing purposes. The first access network device may not need to obtain the user consent information based on each specified purpose, thereby simplifying an operation of the first access network device.

For example, the user consent information indicates whether the user consents to process the data associated with the user for a data processing purpose #1 and a data processing purpose #2. When the first access network device needs to determine whether to process the data associated with the user for the data processing purpose #1, the first access network device may perform determining based on the user consent information. When the first access network device needs to determine whether to process the data associated with the user for the data processing purpose #2, the first access network device may further perform determining based on the user consent information.

With reference to the first aspect, in some implementations of the first aspect, the method further includes: The first access network device obtains the user consent information in response to the data processing requirement.

According to the foregoing technical solution, the first access network device may obtain the user consent information after receiving the data processing requirement, so that a case in which the user consent information is obtained before the data processing requirement is received and the user consent information is used can be avoided, thereby avoiding unnecessary signaling overheads.

With reference to the first aspect, in some implementations of the first aspect, before the first access network device obtains the data processing requirement, the method further includes: The first access network device obtains the user consent information.

According to the foregoing technical solution, the first access network device may obtain the user consent information before receiving the data processing requirement, so that after obtaining the data processing requirement, the first access network device can determine, in a timely manner based on the user consent information and the data processing requirement, whether to process the data associated with the user for the specified purpose, thereby ensuring time validity.

With reference to the first aspect, in some implementations of the first aspect, before the first access network device obtains the user consent information, the method further includes: The first access network device determines that no user consent information associated with the specified purpose exists locally.

According to the foregoing technical solution, the first access network device may initiate a procedure of obtaining the user consent information only when determining that no user consent information associated with the specified purpose exists locally, to avoid unnecessary signaling overheads caused by still initiating the procedure of obtaining the user consent information when the corresponding user consent information already exists locally.

With reference to the first aspect, in some implementations of the first aspect, that the first access network device obtains the user consent information includes: The first access network device sends first indication information to a unified data management network element via a mobility management network element, where the first indication information indicates to obtain user consent information used by an access network device. The first access network device receives the user consent information from the mobility management network element, where the user consent information used by the access network device and user information used by a core network device are stored in the unified data management network element, and the user consent information used by the access network device and the user information used by the core network device are two different types of user consent information.

According to the foregoing technical solution, the first access network device may send the first indication information to a network element (for example, the unified data management network element) that provides the user consent information, to indicate to obtain the user consent information used by the access network device, so as to avoid a case in which the obtained user consent information includes user consent information that cannot be identified by the first access network device, and avoid transfer of useless information.

With reference to the first aspect, in some implementations of the first aspect, the first indication information is 1-bit information, and a value of 1 or 0 indicates to request to obtain the user consent information used by the access network device is requested; or the first indication information is identification information of a network to which the first access network device belongs, and indicates to request to obtain user consent information used by the first access network device.

According to the foregoing technical solution, the first indication information may be the 1-bit information, and the 1-bit information may indicate a network element that provides the user consent information to obtain the user consent information used by the access network device, thereby reducing signaling overheads;

Alternatively, the first indication information may be the identification information of the network to which the first access network device belongs (for example, the network to which the first access network device belongs is a network #1, an identifier of the network # is a PLMN ID #1, and the first indication information may be the PLMN ID #1), and indicates to obtain the user consent information used by the first access network device, to avoid a case in which the obtained user consent information includes user consent information that cannot be identified by the first access network device.

With reference to the first aspect, in some implementations of the first aspect, that the first access network device receives the user consent information from the mobility management network element includes: The first access network device receives an initial user equipment context setup request message from the mobility management network element, where the initial user equipment context setup request message includes the user consent information; the first access network device receives a path switch request message from the mobility management network element, where the path switch request message includes the user consent information; or the first access network device receives a handover request message from the mobility management network element, where the handover request message includes the user consent information.

According to the foregoing technical solution, the first access network device may receive the user consent information from the mobility management network element in a plurality of different manners, thereby improving flexibility of the solution.

With reference to the first aspect, in some implementations of the first aspect, that the first access network device obtains the user consent information includes: The first access network device receives a handover request message from a second access network device, where the handover request message includes the user consent information; the first access network device receives a user equipment context obtaining response message from a second access network device, where the user equipment context obtaining response message includes the user consent information; the first access network device receives container information from a second access network device, where the container information includes the user consent information; or the first access network device receives a secondary node addition request message from a second access network device, where the secondary node addition request message includes the user consent information.

According to the foregoing technical solution, the first access network device may receive the user consent information from another access network device (for example, the second access network device) in a plurality of different manners, to adapt to a mobility procedure specific to the access network device, ensure continuity of user consent information of a terminal device in a movement process, and improve flexibility of the solution.

With reference to the first aspect, in some implementations of the first aspect, that the first access network device determines, based on user consent information and the data processing requirement, whether to process the data associated with the user includes the following several possible manners:
Manner 1: The consent information includes the plurality of data processing purposes.

In Manner 1, that the first access network device determines whether to process the data associated with the user includes:

If the specified purpose belongs to the plurality of data processing purposes, the first access network device determines to process the data associated with the user.

If the specified purpose does not belong to the plurality of data processing purposes, the first access network device determines not to process the data associated with the user.

Manner 2: The user consent information includes the plurality of data processing purposes and a user consent result corresponding to each of the plurality of data processing purposes, and the user consent result indicates whether the user consents to process the data associated with the user for the data processing purpose corresponding to the user consent result.

In Manner 2, that the first access network device determines whether to process the data associated with the user includes:
If the specified purpose is a first data processing purpose in the plurality of data processing purposes and a user consent result corresponding to the first data processing purpose is "consent", the first access network device determines to process the data associated with the user; otherwise, the first access network device determines not to process the data associated with the user.

Manner 3: The user consent information includes the plurality of data processing purposes and an identifier of a first network, where the identifier of the first network indicates whether the user consents to process, in the first network, the data associated with the user.

In Manner 3, that the first access network device determines whether to process the data associated with the user includes:
If the specified purpose is one of the plurality of data processing purposes and the first access network device belongs to the first network, the first access network device determines to process the data associated with the user; otherwise, the first access network device determines not to process the data associated with the user.

Manner 4: The user consent information includes the plurality of data processing purposes, a user consent result corresponding to each of the plurality of data processing purposes, and an identifier of a first network, where the user consent result indicates whether the user consents to process the data associated with the user for the data processing purpose corresponding to the user consent result, and the identifier of the first network indicates whether the user consents to process, in the first network, the data associated with the user.

In Manner 4, that the first access network device determines whether to process the data associated with the user includes: If the specified purpose is a first data processing purpose in the plurality of data processing purposes, a user consent result corresponding to the first data processing purpose is "consent", and the first access network device belongs to the first network, the first access network device determines to process the data associated with the user; otherwise, the first access network device determines not to process the data associated with the user.

According to the foregoing technical solution, the first access network device may determine, in different manners based on different parameters included in the obtained user consent information, whether to process the data associated with the user for the specified purpose, thereby improving flexibility of the solution.

With reference to the first aspect, in some implementations of the first aspect, when the first access network device determines not to process the data associated with the user, the method further includes: The first access network device determines not to collect data that is associated with the user and that corresponds to the specified purpose. The first access network device sends a data collection message to the terminal device, where the data collection message includes a non-collection indication, and the non-collection indication indicates that the data that is associated with the user and that corresponds to the specified purpose is not to be collected. The first access network device receives a response message from the terminal device, where the response message includes first data, and the first data does not include the data that is associated with the user and that corresponds to the specified purpose.

According to the foregoing technical solution, when the first access network device determines not to process the data associated with the user, the first access network device still triggers the data collection message carrying the no-collection indication. This not only avoids obtaining user sensitive data (for example, the data that is associated with the user and that corresponds to the specified purpose), but also ensures service continuity (for example, obtaining other non-sensitive information).

With reference to the first aspect, in some implementations of the first aspect, that the first access network device obtains a data processing requirement includes: The first access network device receives the data processing requirement from a trigger network element; or the first access network device determines the data processing requirement based on a local configuration.

According to the foregoing technical solution, the first access network device may receive the data processing requirement from the trigger network element, or may determine the data processing requirement based on the configuration of the first access network device, and may obtain the data processing requirement in different manners.

With reference to the first aspect, in some implementations of the first aspect, when the first access network device determines not to process the data associated with the user, the method further includes: The first access network device sends a trigger response message in response to the trigger message to the trigger network element, where the trigger response message includes a cause value, and the cause value indicates that user consent is not obtained or the data that is associated with the user and that corresponds to the specified purpose is not collected.

According to the foregoing technical solution, the first access network device may feed back, to the trigger network element, a reason why the data associated with the user is not processed currently, so that the trigger network element learns of the reason why the first access network device does not process the data associated with the user, to determine a next execution action, for example, avoid re-triggering the first access network device to process the data associated with the user.

With reference to the first aspect, in some implementations of the first aspect, when the first access network device determines to process the data associated with the user, the method further includes: The first access network device sends a data collection message to the terminal device, where the data collection message is used to obtain the data associated with the user. The first access network device receives a response message from the terminal device, where the response message includes the data associated with the user. The first access network device processes the data associated with the user for the specified purpose.

With reference to the first aspect, in some implementations of the first aspect, the data use purpose includes access network device data analytics, access network device data model sharing, or non-terrestrial network NTN location query.

According to the foregoing technical solution, data processing purposes in this application may be in a plurality of possible forms, to improve flexibility of the solution.

According to a second aspect, a communication method is provided. The method may be performed by a second access network device, or may be performed by a component (for example, a chip or a circuit) of a second access network device. This is not limited. For ease of description, an example in which the method is performed by the second access network device is used below for description.

The communication method includes: A second access network device obtains second user consent information, where the second user consent information indicates whether a user consents to process data associated with the user for a plurality of specified second data processing purposes, and any one of the plurality of second data processing purposes indicates a purpose of processing the data associated with the user. The second access network device determines user consent information based on the second user consent information. The second access network device sends the user consent information to a first access network device, where the user consent information indicates whether the user consents to process the data associated with the user for a plurality of specified data processing purposes, and any one of the plurality of data processing purposes indicates a purpose of processing the data associated with the user.

According to the foregoing technical solution, the second access network device provides the user consent information for the first access network device, so that the first access network device may determine, based on the user consent information and the data processing requirement, whether to process the data associated with the user for a specified purpose. That is, the first access network device determines, by checking user consent, whether to process the data associated with the user for the specified purpose, instead of directly processing the data associated with the user for the specified purpose, thereby improving security of the data associated with the user.

With reference to the second aspect, in some implementations of the second aspect, that the second access network device sends the user consent information to a first access network device includes: The second access network device sends a handover request message to the first access network device, where the handover request message includes the user consent information; the second access network device sends a user equipment context obtaining response message to the first access network device, where the user equipment context obtaining response message includes the user consent information; or the second access network device sends container information to the first access network device, where the container information includes the user consent information; and the second access network device sends a secondary node addition request message to the first access network device, where the secondary node addition request message includes the user consent information.

According to the foregoing technical solution, the second access network device may send the user consent information to the first access network device in a plurality of different manners, to adapt to a mobility procedure specific to an access network device, ensure continuity of user consent information of a terminal device in a movement process, and improve flexibility of the solution.

With reference to the second aspect, in some implementations of the second aspect, the user consent information includes the plurality of data processing purposes and a user consent result corresponding to each of the plurality of data processing purposes, the user consent result indicates whether the user consents to process the data associated with the user for the data processing purpose corresponding to the user consent result, and the second user consent information includes the plurality of second data processing purposes, a second user consent result corresponding to each of the plurality of second data processing purposes, and an identifier of a second network, where the second user consent result indicates whether the user consents to process the data associated with the user for the data processing purpose corresponding to the second user consent result, and the identifier of the second network indicates whether the user consents to process, in the second network, the data associated with the user. That the second access network device determines user consent information based on the second user consent information includes: The second access network device determines that the first access network device does not belong to the second network. The second access network device uses the plurality of second data processing purposes as the plurality of data processing purposes. The second access network device determines that a plurality of user consent results respectively corresponding to the plurality of data processing purposes are "non-consent".

According to the foregoing technical solution, the second access network device may determine, based on the second user consent information and a network to which the first access network device belongs, the user consent information applicable to the first access network device, to prevent the access network device from obtaining unnecessary user consent information used by another network, thereby reducing information exposure and signaling transmission overheads.

According to a third aspect, a communication method is provided. The method may be performed by a session management network element, or may be performed by a component (for example, a chip or a circuit) of a session management network element. This is not limited herein. For ease of description, an example in which the method is performed by the session management network element is used below for description.

The communication method includes: The mobility management network element sends first indication information to a unified data management network element, where the first indication information indicates to obtain user consent information used by an access network device. The mobility management network element receives third user consent information from the unified data management network element. The mobility management network element determines user consent information based on the third user consent information. The mobility management network element sends the user consent information to a first access network device, where the third user consent information indicates whether a user consents to process data associated with the user for a plurality of specified third data processing purposes, and any one of the plurality of third data processing purposes indicates a purpose of processing the data associated with the user; and the user consent information indicates whether the user consents to process the data associated with the user for a plurality of specified data processing purposes, and any one of the plurality of data processing purposes indicates a purpose of processing the data associated with the user.

According to the foregoing technical solution, the mobility management network element provides the user consent information for the first access network device, so that the first access network device can determine, based on the user consent information and a data processing requirement, whether to process the data associated with the user for a specified purpose. That is, the first access network device determines, by checking user consent, whether to process the data associated with the user for the specified purpose, instead of directly processing the data associated with the user for the specified purpose, thereby improving security of the data associated with the user.

With reference to the third aspect, in some implementations of the third aspect, that the mobility management network element sends the user consent information to a first access network device includes: The mobility management network element sends an initial user equipment context setup request message to the first access network device, where the initial user equipment context setup request message includes the user consent information; the mobility management network element sends a path switch request message to the first access network device, where the path switch request message includes the user consent information; or the mobility management network element sends a handover request message to the first access network device, where the handover request message includes the user consent information.

According to the foregoing technical solution, the mobility management network element may send the user consent information to the first access network device in a plurality of different manners, to adapt to a mobility procedure specific to the access network device, ensure continuity of user consent information of a terminal device in a movement process, and improve flexibility of the solution.

With reference to the third aspect, in some implementations of the third aspect, that the mobility management network element determines user consent information based on the third user consent information includes the following several possible manners:

Manner 1: The user consent information includes the plurality of data processing purposes and a user consent result corresponding to each of the plurality of data processing purposes, and the user consent result indicates whether the user consents to process the data associated with the user for the data processing purpose corresponding to the user consent result.

The third user consent information includes the plurality of third data processing purposes and a third user consent result corresponding to each of the plurality of third data processing purposes, and the third user consent result indicates whether the user consents to process the data associated with the user for the third data processing purpose corresponding to the third user consent result.

In Manner 1, that the mobility management network element determines user consent information includes:
The mobility management network element uses, as the plurality of data processing purposes, a plurality of third data processing purposes respectively corresponding to a plurality of third user consent results that are in the plurality of third user consent results and whose user consent results are "consent". The mobility management network element uses, as the plurality of user consent results, a plurality of third user consent results that are in the plurality of third user consent results and whose user consent results are "consent".

Manner 2: The consent information includes the plurality of data processing purposes.

The third user consent information includes the plurality of third data processing purposes, a third user consent result corresponding to each of the plurality of third data processing purposes, and an identifier of a third network, where the third user consent result indicates whether the user consents to process the data associated with the user for the third data processing purpose corresponding to the third user consent result, and the identifier of the third network indicates whether the user consents to process, in the third network, the data associated with the user.

In Manner 2, that the mobility management network element determines user consent information includes: The mobility management network element determines that the first access network device belongs to the third network. The mobility management network element uses, as the plurality of data processing purposes, a plurality of third data processing purposes respectively corresponding to a plurality of third user consent results that are in the plurality of third user consent results and whose user consent results are "consent".

Manner 3: The user consent information includes the plurality of data processing purposes and a user consent result corresponding to each of the plurality of data processing purposes, and the user consent result indicates whether the user consents to process the data associated with the user for the data processing purpose corresponding to the user consent result.

The third user consent information includes the plurality of third data processing purposes, a third user consent result corresponding to each of the plurality of third data processing purposes, and an identifier of a third network, where the third user consent result indicates whether the user consents to process the data associated with the user for the third data processing purpose corresponding to the third user consent result, and the identifier of the third network indicates whether the user consents to process, in the third network, the data associated with the user.

In Manner 3, that the mobility management network element determines user consent information includes: The mobility management network element determines that the first access network device belongs to the third network. The mobility management network element uses, as the plurality of data processing purposes, a plurality of third data processing purposes respectively corresponding to a plurality of third user consent results that are in the plurality of third user consent results and whose user consent results are "consent". The mobility management network element uses, as the plurality of user consent results, a plurality of third user consent results that are in the plurality of third user consent results and whose user consent results are "consent".

Manner 4: The user consent information includes the plurality of data processing purposes and a user consent result corresponding to each of the plurality of data processing purposes, and the user consent result indicates whether the user consents to process the data associated with the user for the data processing purpose corresponding to the user consent result.

The third user consent information includes the plurality of third data processing purposes, a third user consent result corresponding to each of the plurality of third data processing purposes, and an identifier of a third network, where the third user consent result indicates whether the user consents to process the data associated with the user for the third data processing purpose corresponding to the third user consent result, and the identifier of the third network indicates whether the user consents to process, in the third network, the data associated with the user.

In Manner 4, that the mobility management network element determines user consent information includes: The mobility management network element determines that the first access network device does not belong to the third network. The mobility management network element uses the plurality of third data processing purposes as the plurality of data processing purposes. The mobility management network element determines that a plurality of user consent results respectively corresponding to the plurality of data processing purposes are "non-consent".

According to the foregoing technical solution, the mobility management network element may determine the user consent information in different manners based on different parameters included in the obtained user consent information and different parameters included in the third user consent information, thereby improving flexibility of the solution.

According to a fourth aspect, a communication method is provided. The method may be performed by a unified data management network element, or may be performed by a component (for example, a chip or a circuit) of a unified data management network element. This is not limited herein. For ease of description, an example in which the method is performed by the unified data management network element is used below for description.

The communication method includes: A unified data management network element receives first indication information, where the first indication information indicates to obtain user consent information used by an access network device. The unified data management network element determines, from subscription data of a user, the user consent information used by the access network device. The unified data management network element sends third user consent information, where the subscription data of the user includes the user consent information used by the access network device and user information used by a core network device, the user consent information used by the access network device and the user information used by the core network device are two different types of user consent information, and the user consent information used by the access network device is the third user consent information, or the user consent information used by the access network device is partial user consent information in the third user consent information; and the third user consent information indicates whether the user consents to process data associated with the user for a plurality of specified third data processing purposes, and any one of the plurality of third data processing purposes indicates a purpose of processing the data associated with the user.

According to the foregoing technical solution, the user consent information stored in the unified data management network element includes a plurality of different types of user consent information (the user consent information used by the access network device and the user consent information used by the core network device), to provide appropriate user information for the access network device, and prevent the access network device from obtaining unnecessary user consent information used by the core network device, thereby reducing information exposure and signaling transmission overheads.

With reference to the fourth aspect, in some implementations of the fourth aspect, the third user consent information includes the plurality of third data processing purposes and a third user consent result corresponding to each of the plurality of third data processing purposes, and the third user consent result indicates whether the user consents to process the data associated with the user for the third data processing purpose corresponding to the third user consent result.

With reference to the fourth aspect, in some implementations of the fourth aspect, the third user consent information further includes an identifier of a third network, and the identifier of the third network indicates whether the user consents to process, in the third network, the data associated with the user.

According to a fourth aspect, a communication apparatus is provided. The apparatus is configured to perform the method according to the first aspect.

The apparatus includes: an obtaining unit, configured to obtain a data processing requirement, where the data processing requirement indicates a requirement for processing data associated with a user for a specified purpose; and a processing unit, configured to determine, based on user consent information and the data processing requirement, whether to process the data associated with the user for the specified purpose, where the user consent information indicates whether the user consents to process the data associated with the user for a plurality of specified data processing purposes, and any one of the plurality of data processing purposes indicates a purpose of processing the data associated with the user.

With reference to the fifth aspect, in some implementations of the fifth aspect, the obtaining unit is further configured to obtain the user consent information in response to the data processing requirement.

With reference to the fifth aspect, in some implementations of the fifth aspect, before the obtaining unit obtains the data processing requirement, the obtaining unit is further configured to obtain the user consent information.

With reference to the fifth aspect, in some implementations of the fifth aspect, before the obtaining unit obtains the user consent information, the processing unit is further configured to determine that no user consent information associated with the specified purpose exists locally.

With reference to the fifth aspect, in some implementations of the fifth aspect, that the obtaining unit obtains the user consent information includes: The sending unit sends first indication information to a unified data management network element via a mobility management network element, where the first indication information indicates to obtain user consent information used by an access network device. The receiving unit receives the user consent information from the mobility management network element, where the user consent information used by the access network device and user information used by a core network device are stored in the unified data management network element, and the user consent information used by the access network device and the user information used by the core network device are two different types of user consent information.

With reference to the fifth aspect, in some implementations of the fifth aspect, the first indication information is 1-bit information, and a value of 1 or 0 indicates to request to obtain the user consent information used by the access network device is requested; or the first indication information is identification information of a network to which the first access network device belongs, and indicates to request to obtain user consent information used by the first access network device.

With reference to the fifth aspect, in some implementations of the fifth aspect, that the receiving unit receives the user consent information from the mobility management network element includes: The receiving unit receives an initial user equipment context establishment request message from the mobility management network element, where the initial user equipment context establishment request message includes the user consent information; the receiving unit receives a path switch request message from the mobility management network element, where the path switch request message includes the user consent information; or the receiving unit receives a handover request message from the mobility management network element, where the handover request message includes the user consent information.

With reference to the fifth aspect, in some implementations of the fifth aspect, that the obtaining unit obtains the user consent information includes: The receiving unit receives a handover request message from a second access network device, where the handover request message includes the user consent information; the receiving unit receives a user equipment context obtaining response message from a second access network device, where the user equipment context obtaining response message includes the user consent information; the receiving unit receives container information from a second access network device, where the container information includes the user consent information; or the receiving unit receives a secondary node addition request message from a second access network device, where the secondary node addition request message includes the user consent information.

With reference to the fifth aspect, in some implementations of the fifth aspect, that the processing unit determines, based on user consent information and the data processing requirement, whether to process the data associated with the user includes the following several possible manners:
Manner 1: The consent information includes the plurality of data processing purposes.

In Manner 1, that the processing unit determines whether to process the data associated with the user includes:
If the specified purpose belongs to the plurality of data processing purposes, the processing unit determines to process the data associated with the user.

If the specified purpose does not belong to the plurality of data processing purposes, the processing unit determines not to process the data associated with the user.

Manner 2: The user consent information includes the plurality of data processing purposes and a user consent result corresponding to each of the plurality of data processing purposes, and the user consent result indicates whether the user consents to process the data associated with the user for the data processing purpose corresponding to the user consent result.

In Manner 2, that the processing unit determines whether to process the data associated with the user includes:
If the specified purpose is a first data processing purpose in the plurality of data processing purposes and a user consent result corresponding to the first data processing purpose is "consent", the processing unit determines to process the data associated with the user; otherwise, the processing unit determines not to process the data associated with the user.

Manner 3: The user consent information includes the plurality of data processing purposes and an identifier of a first network, where the identifier of the first network indicates whether the user consents to process, in the first network, the data associated with the user.

In Manner 3, that the processing unit determines whether to process the data associated with the user includes:

If the specified purpose is one of the plurality of data processing purposes and the first access network device belongs to the first network, the processing unit determines to process the data associated with the user; otherwise, the processing unit determines not to process the data associated with the user.

Manner 4: The user consent information includes the plurality of data processing purposes, a user consent result corresponding to each of the plurality of data processing purposes, and an identifier of a first network, where the user consent result indicates whether the user consents to process the data associated with the user for the data processing purpose corresponding to the user consent result, and the identifier of the first network indicates whether the user consents to process, in the first network, the data associated with the user.

In Manner 4, that the processing unit determines whether to process the data associated with the user includes: If the specified purpose is a first data processing purpose in the plurality of data processing purposes, a user consent result corresponding to the first data processing purpose is "consent", and the first access network device belongs to the first network, the processing unit determines to process the data associated with the user; otherwise, the processing unit determines not to process the data associated with the user.

With reference to the fifth aspect, in some implementations of the fifth aspect, when the processing unit determines not to process the data associated with the user, the processing unit determines not to collect data that is associated with the user and that corresponds to the specified purpose. The sending unit sends a data collection message to a terminal device, where the data collection message includes a non-collection indication, and the non-collection indication indicates that the data that is associated with the user and that corresponds to the specified purpose is not to be collected. The receiving unit receives a response message from the terminal device, where the response message includes first data, and the first data does not include the data that is associated with the user and that corresponds to the specified purpose.

With reference to the fifth aspect, in some implementations of the fifth aspect, that the obtaining unit obtains a data processing requirement includes: The receiving unit receives the data processing requirement from a trigger network element; or the processing unit determines the data processing requirement based on a local configuration.

With reference to the fifth aspect, in some implementations of the fifth aspect, when the processing unit determines not to process the data associated with the user, the sending unit sends a trigger response message in response to the trigger message to the trigger network element, where the trigger response message includes a cause value, and the cause value indicates that user consent is not obtained or the data that is associated with the user and that corresponds to the specified purpose is not collected.

With reference to the fifth aspect, in some implementations of the fifth aspect, when the processing unit determines to process the data associated with the user, the sending unit sends a data collection message to the terminal device, where the data collection message is used to obtain the data associated with the user. The receiving unit receives a response message from the terminal device, where the response message includes the data associated with the user. The processing unit processes the data associated with the user for the specified purpose.

With reference to the fifth aspect, in some implementations of the fifth aspect, the data use purpose includes access network device data analytics, access network device data model sharing, or non-terrestrial network NTN location query.

For beneficial effects of the method shown in the fifth aspect and the possible designs of the fifth aspect, refer to the beneficial effects in the first aspect and the possible designs of the first aspect.

According to a sixth aspect, a communication apparatus is provided. The apparatus is configured to perform the method according to the second aspect.

The apparatus includes: an obtaining unit, configured to obtain second user consent information, where the second user consent information indicates whether a user consents to process data associated with the user for a plurality of specified second data processing purposes, and any one of the plurality of second data processing purposes indicates a purpose of processing the data associated with the user; a processing unit, configured to determine user consent information based on the second user consent information; and a sending unit, configured to send the user consent information to a first access network device, where the user consent information indicates whether the user consents to process the data associated with the user for a plurality of specified data processing purposes, and any one of the plurality of data processing purposes indicates a purpose of processing the data associated with the user.

With reference to the sixth aspect, in some implementations of the sixth aspect, that the sending unit sends the user consent information to a first access network device includes: The sending unit sends a handover request message to the first access network device, where the handover request message includes the user consent information; the sending unit sends a user equipment context obtaining response message to the first access network device, where the user equipment context obtaining response message includes the user consent information; or the sending unit sends container information to the first access network device, where the container information includes the user consent information; and the sending unit sends a secondary node addition request message to the first access network device, where the secondary node addition request message includes the user consent information.

With reference to the sixth aspect, in some implementations of the sixth aspect, the user consent information includes the plurality of data processing purposes and a user consent result corresponding to each of the plurality of data processing purposes, the user consent result indicates whether the user consents to process the data associated with the user for the data processing purpose corresponding to the user consent result, and the second user consent information includes the plurality of second data processing purposes, a second user consent result corresponding to each of the plurality of second data processing purposes, and an identifier of a second network, where the second user consent result indicates whether the user consents to process the data associated with the user for the data processing purpose corresponding to the second user consent result, and the identifier of the second network indicates whether the user consents to process, in the second network, the data associated with the user. That the processing unit determines user consent information based on the second user consent information includes: The processing unit determines that the first access network device does not belong to the second network. The processing unit uses the plurality of second data processing purposes as the plurality of data processing purposes. The processing unit determines that a plurality of user consent results respectively corresponding to the plurality of data processing purposes are "non-consent".

For beneficial effects of the method shown in the sixth aspect and the possible designs of the sixth aspect, refer to the beneficial effects in the second aspect and the possible designs of the second aspect.

According to a seventh aspect, a communication apparatus is provided. The apparatus is configured to perform the method according to the third aspect.

The apparatus includes: a sending unit, configured to send first indication information to a unified data management network element, where the first indication information indicates to obtain user consent information used by an access network device; a receiving unit, configured to receive third user consent information from the unified data management network element; and a processing unit, configured to determine user consent information based on the third user consent information. The sending unit sends the user consent information to a first access network device, where the third user consent information indicates whether a user consents to process data associated with the user for a plurality of specified third data processing purposes, and any one of the plurality of third data processing purposes indicates a purpose of processing the data associated with the user; and the user consent information indicates whether the user consents to process the data associated with the user for a plurality of specified data processing purposes, and any one of the plurality of data processing purposes indicates a purpose of processing the data associated with the user.

With reference to the seventh aspect, in some implementations of the seventh aspect, that the sending unit sends the user consent information to a first access network device includes: The sending unit sends an initial user equipment context setup request message to the first access network device, where the initial user equipment context setup request message includes the user consent information; the sending unit sends a path switch request message to the first access network device, where the path switch request message includes the user consent information; or the sending unit sends a handover request message to the first access network device, where the handover request message includes the user consent information.

With reference to the seventh aspect, in some implementations of the seventh aspect, that the processing unit determines user consent information based on the third user consent information includes the following several possible manners:
Manner 1: The user consent information includes the plurality of data processing purposes and a user consent result corresponding to each of the plurality of data processing purposes, and the user consent result indicates whether the user consents to process the data associated with the user for the data processing purpose corresponding to the user consent result.

The third user consent information includes the plurality of third data processing purposes and a third user consent result corresponding to each of the plurality of third data processing purposes, and the third user consent result indicates whether the user consents to process the data associated with the user for the third data processing purpose corresponding to the third user consent result.

In Manner 1, that the processing unit determines user consent information includes:
The processing unit uses, as the plurality of data processing purposes, a plurality of third data processing purposes respectively corresponding to a plurality of third user consent results that are in the plurality of third user consent results and whose user consent results are "consent". The processing unit uses, as the plurality of user consent results, a plurality of third user consent results that are in the plurality of third user consent results and whose user consent results are "consent".

Manner 2: The consent information includes the plurality of data processing purposes.

The third user consent information includes the plurality of third data processing purposes, a third user consent result corresponding to each of the plurality of third data processing purposes, and an identifier of a third network, where the third user consent result indicates whether the user consents to process the data associated with the user for the third data processing purpose corresponding to the third user consent result, and the identifier of the third network indicates whether the user consents to process, in the third network, the data associated with the user.

In Manner 2, that the processing unit determines user consent information includes: The processing unit determines that the first access network device belongs to the third network. The processing unit uses, as the plurality of data processing purposes, a plurality of third data processing purposes respectively corresponding to a plurality of third user consent results that are in the plurality of third user consent results and whose user consent results are "consent".

Manner 3: The user consent information includes the plurality of data processing purposes and a user consent result corresponding to each of the plurality of data processing purposes, and the user consent result indicates whether the user consents to process the data associated with the user for the data processing purpose corresponding to the user consent result.

The third user consent information includes the plurality of third data processing purposes, a third user consent result corresponding to each of the plurality of third data processing purposes, and an identifier of a third network, where the third user consent result indicates whether the user consents to process the data associated with the user for the third data processing purpose corresponding to the third user consent result, and the identifier of the third network indicates whether the user consents to process, in the third network, the data associated with the user.

In Manner 3, that the processing unit determines user consent information includes: The processing unit determines that the first access network device belongs to the third network. The processing unit uses, as the plurality of data processing purposes, a plurality of third data processing purposes respectively corresponding to a plurality of third user consent results that are in the plurality of third user consent results and whose user consent results are "consent". The processing unit uses, as the plurality of user consent results, a plurality of third user consent results that are in the plurality of third user consent results and whose user consent results are "consent".

Manner 4: The user consent information includes the plurality of data processing purposes and a user consent result corresponding to each of the plurality of data processing purposes, and the user consent result indicates whether the user consents to process the data associated with the user for the data processing purpose corresponding to the user consent result.

The third user consent information includes the plurality of third data processing purposes, a third user consent result corresponding to each of the plurality of third data processing purposes, and an identifier of a third network, where the third user consent result indicates whether the user consents to process the data associated with the user for the third data processing purpose corresponding to the third user consent result, and the identifier of the third network indicates whether the user consents to process, in the third network, the data associated with the user.

In Manner 4, that the processing unit determines user consent information includes: The processing unit determines that the first access network device does not belong to the third network. The processing unit uses the plurality of third data processing purposes as the plurality of data processing purposes. The processing unit determines that a plurality of user consent results respectively corresponding to the plurality of data processing purposes are "non-consent".

For beneficial effects of the method shown in the seventh aspect and the possible designs of the seventh aspect, refer to the beneficial effects in the third aspect and the possible designs of the third aspect.

According to an eighth aspect, a communication apparatus is provided. The apparatus is configured to perform the method according to the fourth aspect.

The apparatus includes: a receiving unit, configured to receive first indication information, where the first indication information indicates to obtain user consent information used by an access network device; a processing unit, configured to determine, from subscription data of a user, the user consent information used by the access network device; and a sending unit, configured to send third user consent information, where the subscription data of the user includes the user consent information used by the access network device and user information used by a core network device, the user consent information used by the access network device and the user information used by the core network device are two different types of user consent information, and the user consent information used by the access network device is the third user consent information, or the user consent information used by the access network device is partial user consent information in the third user consent information; and the third user consent information indicates whether the user consents to process data associated with the user for a plurality of specified third data processing purposes, and any one of the plurality of third data processing purposes indicates a purpose of processing the data associated with the user.

With reference to the eighth aspect, in some implementations of the eighth aspect, the third user consent information includes the plurality of third data processing purposes and a third user consent result corresponding to each of the plurality of third data processing purposes, and the third user consent result indicates whether the user consents to process the data associated with the user for the third data processing purpose corresponding to the third user consent result.

With reference to the eighth aspect, in some implementations of the eighth aspect, the third user consent information further includes an identifier of a third network, and the identifier of the third network indicates whether the user consents to process, in the third network, the data associated with the user.

For beneficial effects of the method shown in the eighth aspect and the possible designs of the eighth aspect, refer to the beneficial effects in the fourth aspect and the possible designs of the fourth aspect.

According to a ninth aspect, a communication apparatus is provided. The apparatus is configured to perform the methods according to the first aspect to the fourth aspect. Specifically, the communication apparatus may include units and/or modules configured to perform the method according to any one of the implementations of the first aspect to the fourth aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a tenth aspect, this application provides a processor, configured to perform the methods according to the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving the request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to an eleventh aspect, a computer-readable storage medium is provided. The computer-readable storage medium stores program code to be executed by a device, and the program code is used to perform any method according to the first aspect to the fourth aspect.

According to a twelfth aspect, a computer program product including instructions is provided. When the computer program product runs on a computer, the computer is enabled to perform any method according to the first aspect to the fourth aspect.

According to a thirteenth aspect, a chip is provided. The chip includes a processor and a communication interface. The processor reads, through the communication interface, instructions stored in a memory, to perform any method according to the first aspect to the fourth aspect.

Optionally, in an implementation, the chip may further include the memory. The memory stores the instructions, and the processor is configured to execute the instructions stored in the memory. When the instructions are executed, the processor is configured to perform any method according to the first aspect to the fourth aspect.

According to a fourteenth aspect, a communication system is provided, and includes the communication apparatuses according to the fifth aspect to the eighth aspect.

### BRIEF DESCRIPTION OF DRAWINGS

FIG. 1 is a diagram of an architecture of a 5G system to which an embodiment of this application is applicable;
FIG. 2 is a schematic flowchart of checking user consent by an NWDAF;
FIG. 3 is a schematic flowchart of a communication method according to an embodiment of this application;
FIG. 4 is a schematic flowchart of obtaining first user consent information by a first RAN according to an embodiment of this application;
FIG. 5 is another schematic flowchart of obtaining first user consent information by a first RAN according to an embodiment of this application;
FIG. 6 is another schematic flowchart of obtaining first user consent information by a first RAN according to an embodiment of this application;
FIG. 7 is another schematic flowchart of obtaining first user consent information by a first RAN according to an embodiment of this application;
FIG. 8 is another schematic flowchart of obtaining first user consent information by a first RAN according to an embodiment of this application;
FIG. 9 is another schematic flowchart of obtaining first user consent information by a first RAN according to an embodiment of this application;
FIG. 10 is another schematic flowchart of obtaining first user consent information by a first RAN according to an embodiment of this application;
FIG. 11 is a schematic block diagram of a communication apparatus according to an embodiment of this application;
FIG. 12 is a schematic block diagram of a communication apparatus according to another embodiment of this application; and
FIG. 13 is a schematic block diagram of a communication apparatus according to still another embodiment of this application.

### DESCRIPTION OF EMBODIMENTS

The following describes technical solutions in embodiments of this application with reference to accompanying drawings.

The technical solutions in embodiments of this application may be applied to various communication systems, for example, a 5G system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

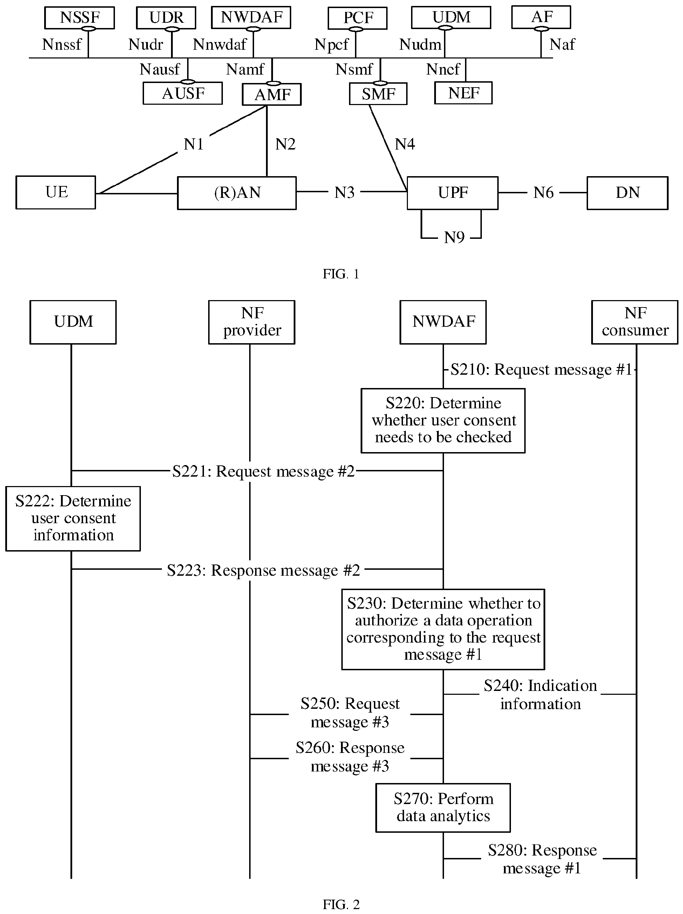

For ease of understanding of embodiments of this application, a communication system to which an embodiment of this application is applicable is first briefly described with reference to FIG. 1.

As an example for description, FIG. 1 is a diagram of an architecture of a 5G system to which an embodiment of this application is applicable. FIG. 1 is a diagram of a 5G network architecture based on a service-based interface. As shown in FIG. 1, the network architecture may include but is not limited to the following network elements (or referred to as function network elements, function entities, nodes, devices, or the like):
user equipment (user equipment, UE), a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a data network (data network, DN), a network slice selection function (network slice selection function, NSSF), an authentication server function (authentication server function, AUSF), a network exposure function (network exposure function, NEF) network element, a network data analytics function (network data analytics function, NWDAF) network element, a unified data repository (unified data repository, UDR), and the like.

The following briefly describes the network elements shown in FIG. 1.
1. UE: may include various handheld devices having a wireless communication function, vehicle-mounted devices, wearable devices, computing devices, or other processing devices connected to a wireless modem, and various forms of terminals, mobile stations (mobile station, MS), terminals (terminal), soft terminals, or the like, for example, water meters, electricity meters, and sensors.

For example, the user equipment in this embodiment of this application may be an access terminal, a subscriber unit, a subscriber station, a mobile station, a relay station, a remote station, a remote terminal, mobile equipment, a user terminal (user terminal), a terminal device (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, user equipment in a 5G network, user equipment in a future evolved public land mobile network (public land mobile network, PLMN), user equipment in the future internet of vehicles, or the like. This is not limited in this embodiment of this application.

By way of example, and not limitation, in this embodiment of this application, the wearable device may also be referred to as a wearable smart device, and is a general term of wearable devices developed by intelligently designing daily wear by using a wearable technology, such as glasses, gloves, a watch, clothing, and shoes. The wearable device is a portable device that is directly worn on the body or integrated into clothes or an accessory of a user. The wearable device is not only a hardware device, but also implements a powerful function through software support, data exchange, and cloud interaction. In broad sense, wearable smart devices include full-featured and large-sized devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the user equipment in embodiments of this application may alternatively be a user equipment in an internet of things (Internet of Things, IoT) system. IoT is an important part of development of future information technologies. A main technical feature of the IoT is to connect an object to a network by using a communication technology, to implement an intelligent network of human-machine interconnection and thing-thing interconnection. In embodiments of this application, an IoT technology may implement massive connections, deep coverage, and terminal power saving by using, for example, a narrowband (narrow band, NB) technology.

In addition, in embodiments of this application, the user equipment may further include sensors. Main functions include: collecting data (for some user equipments), receiving control information and downlink data of an access network device, sending an electromagnetic wave, and transmitting uplink data to the access network device.

In embodiments of this application, an apparatus configured to implement a function of the user equipment may be user equipment, or may be an apparatus that can support the user equipment in implementing the function, for example, a chip system, or a combined device or component that can implement the function of the user equipment. The apparatus may be installed in the user equipment.

In embodiments of this application, the chip system may include a chip, or may include a chip and another discrete component. In the technical solutions provided in embodiments of this application, an example in which the apparatus configured to implement the function of the user equipment is the user equipment is used to describe the technical solutions provided in embodiments of this application.

2. (R)AN: is used to provide a network access function for authorized user equipment in a specific area, and can use transmission tunnels of different quality of service based on a level of the user equipment, a service requirement, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device having a wireless transceiver function for communicating with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseband unit, BBU), and an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling, for example, RRC layer signaling, may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

3. UPF network element: mainly includes the following user plane-related functions: data packet routing and transmission, data packet detection, service usage reporting, quality of service (quality of service, QoS) processing, lawful interception, uplink data packet detection, downlink data packet storage, and the like.

In a 5G communication system, the user plane network element may be a UPF network element. In a future communication system, the user plane network element may still be the UPF network element, or may have another name. This is not limited in this application.

For example, a UPF may include a packet data unit session anchor UPF (packet data unit session anchor UPF, PSA UPF) and an intermediate UPF (Intermediate UPF, I-UPF).

The PSA UPF is a UPF that supports a PDU session anchor function, is a UPF connected to a DN through an N6 interface, and is responsible for data transmission between the core network and the data network. All UPFs between the (R)AN and the PSA UPF are referred to as I-UPFs.

For example, an uplink classifier functionality UPF (uplink classifier functionality UPF, UL CL UPF) in embodiments of this application is a UPF that can implement a function of an uplink classifier (Uplink Classifier), and is inserted by an SMF into a session of a terminal device. Specifically, the UL CL UPF is connected to the PSA UPF through an N9 interface. After uplink data (or may be referred to as traffic, a data packet, or the like) is identified according to a forwarding rule, data that needs to be sent to the PSA UPF is identified and forwarded. For downlink data, data from the PSA UPF is forwarded to the RAN through an N3 interface. In this application, the UL CL UPF may be understood as a specific I-UPF. In addition, the UL CL UPF and the PSA UPF may be co-deployed. For example, the UL CL UPF and a local PSA UPF (Local PSA UPF) are co-deployed. In other words, the UL CL UPF in embodiments of this application may be understood as implementing some functions of a network element in which the UL CL UPF and the local PSA UPF are co-deployed (for example, a data forwarding function and a function of another anchor UPF are implemented by the local PSA UPF).

It should be noted that a specific form of the I-UPF is not limited in embodiments of this application. The UL CL UPF is merely an example, and does not constitute any limitation on the protection scope of this application. For example, the I-UPF may alternatively be a branch point (branch point, BP) UPF (for example, an I-UPF in an internet protocol version 6 multi-home (Internet Protocol Version 6 Multi-home, IPv6 Multi-home) scenario), or the I-UPF may be the network element in which the UL CL UPF and the local PSA UPF are co-deployed. Alternatively, the I-UPF may be referred to as a satellite-borne (on board) UPF or the like.

4. DN: is a network used to provide transmission data.

In a 5G communication system, the data network element may be a DN network element. In a future communication system, the data network element may still be the DN element, or may have another name. This is not limited in this application.

5. AMF network element: mainly includes the following functions related to access and mobility, for example, connection management, mobility management, registration management, access authentication and authorization, reachability management, and security context management.

In a 5G communication system, the access management network element may be an AMF network element. In a future communication system, the access management network element may still be the AMF network element, or may have another name. This is not limited in this application.

6. SMF: is mainly used for session management, internet protocol (internet protocol, IP) address assignment and management of a terminal device, selection of a termination point that can manage a user plane function and a policy control and charging function interface, downlink data notification, and the like.

In a 5G communication system, the session management network element may be an SMF network element. In a future communication system, the session management network element may still be the SMF network element, or may have another name. This is not limited in this application.

7. PCF: is used to guide a unified policy framework for network behavior, and provide policy rule information for a control plane function network element (for example, an AMF or SMF network element), and the like.

8. UDM: may be understood as a name of a unified data management network element in a 5G architecture. The unified data management network element mainly includes the following functions: unified data management, authentication credential processing in a mechanism supporting 3GPP authentication and key agreement, user identity processing, access authorization, registration and mobility management, subscription management, short message management, and the like.

9. AF: is used to provide application layer information, and may interact with a policy framework through a network exposure function network element, or directly interact with a policy framework to request for policy decision-making, and the like.

10. NSSF: mainly includes the following functions: selecting a set of network slice instances for UE, determining allowed network slice selection assistance information (network slice selection assistance information, NSSAI), determining an AMF set that can serve the UE, and the like.

11. AUSF: mainly includes the following functions: an authentication server function interacting with a unified data management network element to obtain user information, and performing an authentication-related function, for example, generating an intermediate key.

12. NWDAF: identifies a network slice instance and loads load level information of the network slice instance. The network data analytics function enables NF consumers to subscribe to or unsubscribe from periodic notifications and notify the consumers when a threshold is exceeded.

In a future communication system, the network data analytics function network element may still be the NWDAF network element, or may have another name. This is not limited in this application.

13. UDR: is mainly used for implementing storage and retrieval functions of subscription data, policy data, application data, and other types of data.

It may be understood that the foregoing network elements or function network elements may be network elements in a hardware device, software functions running on dedicated hardware, or virtualization functions instantiated on a platform (for example, a cloud platform).

14. NEF: may be understood as a name of a capability exposure network element in a 5G architecture. The capability exposure network element mainly includes the following functions: securely opening a service and a capability that are provided by a 3GPP network function, such as internally opening or opening to a third party; and converting or translating information exchanged with the AF and information exchanged with an internal network function, for example, an AF service identifier and internal 5G core network information such as a data network name (data network name, DNN), and single network slice selection assistance information (single network slice selection assistance information, S-NSSAI).

It can be learned from FIG. 1, interfaces between control plane network elements in FIG. 1 are service-based interfaces.

In the architecture shown in FIG. 1, names and functions of interfaces between the network elements are as follows:
(1) N1: is an interface between an AMF and a terminal, and may be used to transfer QoS control rules or the like to the terminal.
(2) N2: is an interface between the AMF and a RAN, and may be used to transfer radio bearer control information or the like from a core network side to the RAN.
(3) N3: is an interface between the RAN and a UPF, and may be used to transfer uplink and downlink user-plane data between the RAN and the UPF.
(4) N4: is an interface between an SMF and the UPF, and may be used to transfer information between a control plane and a user plane, including delivering forwarding rules, QoS control rules, traffic statistics rules, or the like from the control plane to the user plane, and reporting user-plane information.
(5) N9: is a user plane interface between UPFs, and is used to transfer uplink and downlink user data flows between the UPFs.
(6) Service-based interfaces Nnssf, Nudr, Nausf, Nnwdaf, Namf, Npcf, Nsmf, Nudm, Nnef, and Naf: are respectively service-based interfaces provided by the NSSF, the UDR, the AUSF, the NWDAF, the AMF, the PCF, the SMF, the UDM, the NEF, and the AF, and are used to invoke corresponding service-based operations.
(7) N6: is an interface between the UPF and the DN, and is used to transfer uplink and downlink user data flows between the UPF and the DN.

N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

It should be noted that the interfaces between the control plane network elements may alternatively be point-to-point interfaces. Details are not described herein.

It should be understood that the network architecture to which embodiments of this application can be applied is merely an example for description, and the network architecture to which embodiments of this application are applicable is not limited thereto. Any network architecture that can implement functions of the foregoing network elements is applicable to embodiments of this application.

It should be further understood that the AMF, SMF, UPF, PCF, UDM, and the like shown in FIG. 1 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility that another name is used in the 5G network and another future network. For example, in a 6G network, a part or all of the foregoing network elements may still use terms in 5G, or may use other names.

It should be further understood that names of the interfaces between the network elements in FIG. 1 are merely examples, and the interfaces may have other names in a specific implementation. This is not specifically limited in this application. In addition, names of messages (or signaling) transmitted between the foregoing network elements are merely examples, and do not constitute any limitation on functions of the messages.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to a similar technical problem.

The aspects or features of embodiments of this application may be implemented as a method, or implemented by using an apparatus or a product of standard programming and/or engineering technologies. The term "product" used in this application covers a computer program that can be accessed from any computer-readable component, carrier, or medium. For example, the computer-readable storage medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

Currently, laws for protecting personal information impose the following requirement on how to protect personal information: Before processing personal information, a data controller needs to obtain user consent. That is, before processing the personal information, the data controller needs to obtain explicit user consent to a data processing purpose.

Specifically, an operator network is a data controller for a subscriber of the operator network. Therefore, the operator network also needs to obtain user consent before collecting user data to perform operations for some specific purposes. The operator network includes a base station and a core network device.

For example, before performing operations for some specific purposes, the core network device included in the operator network needs to obtain user consent. For example, before using user data for analytics, the NWDAF obtains user consent.

With reference to FIG. 2, the following briefly describes how the NWDAF checks whether user consent is obtained when the NWDAF uses user data for analytics, to determine whether a corresponding data operation is authorized. FIG. 2 is a schematic flowchart of checking user consent by an NWDAF, including the following steps.

S210: An NF consumer (consumer) sends a request message #1 to the NWDAF.

The request message #1 is used to request the NWDAF to perform data analytics based on user data. The request message #1 includes user identification information and an analytics identifier (Analytics ID).

The user identification information includes but is not limited to a subscription permanent identifier (Subscription Permanent Identifier, SUPI), a subscription concealed identifier (Subscription Concealed Identifier, SUCI), a generic public subscription identifier (Generic Public Subscription Identifier, GPSI), a permanent equipment identifier (Permanent Equipment Identifier, PEI), or a mobile subscriber international ISDN/PSTN number (Mobile Subscriber International ISDN/PSTN number, MSISDN) of a user. An ISDN is an integrated service digital network (Integrated Service Digital Network), and a PSTN is a public switched telephone network (Public Switched Telephone Network). The MSISDN may be understood as an identity that can be disclosed externally by the user, for example, a phone number of the user. The analytics ID may indicate data analytics to be performed, for example, the data analytics task to be performed is UE mobility analytics (UE mobility Analytics) or UE communication analytics (UE communication Analytics).

It should be understood that a specific form of the user identification information is not limited in this application, and can identify the user. In addition, a specific form of the analytics ID is not limited, and can identify specific data analytics.

For example, the NF consumer may be a network element that requests data analytics, such as an AF or a PCF. This is not limited in this application.

For example, the request message #1 may be referred to as an Nnwdaf_AnalyticsSubscription_Subscribe Request message. It should be understood that a name of the message (or information) is not limited in this application, and a corresponding function can be implemented.

S220: The NWDAF determines whether user consent needs to be checked.

For example, the NWDAF determines, according to a local policy, whether user consent needs to be checked.

For example, the local policy is as follows: If the request message #1 does not involve an operation on personal data of the user, user consent does not need to be checked; or if the request message #1 involves an operation on personal data of the user, user consent needs to be checked.

When it is determined that user consent needs to be checked, it is determined whether a context of the user includes user consent information. If the context of the user includes the user consent information, steps S221 to S223 do not need to be performed; or if the context of the user does not include the user consent information, steps S221 to S223 need to be performed.

For example, if the request message #1 is used to request to analyze only data generated by a network, the NWDAF does not need to check user consent.

It should be understood that, how the NWDAF determines whether user consent needs to be checked is not limited in this embodiment of this application.

S221: The NWDAF sends a request message #2 to a UDM.

The request message #2 is used to obtain subscription information of the user. The request message #2 includes the user identification information and a subscription data type, and indicates to obtain the user consent information. Optionally, the subscription data type is denoted as "user consent".

For example, the request message #2 may be referred to as an Nudm_SDM_Get Request message.

S222: The UDM determines the user consent information.

Specifically, the UDM obtains the user consent information based on the user identification information and the subscription data type. The user consent information includes a data processing purpose and a user consent result. The data processing purpose indicates a purpose of performing an operation on the personal data, for example, including model training, data analytics, and data sharing. The user consent result indicates whether the data use purpose is consented. For example, granted represents consent, and not granted represents non-consent.

For example, a form of the user consent information is shown in Table 1.

**Table 1**

| Data processing purpose | User consent result |
|---|---|
| Model training | Granted |
| Data analytics | Not granted |
| Data sharing | Not granted |

It should be noted that a data processing purpose in the user consent information is designed for core network elements (for example, the NWDAF and an NEF). These network elements may directly send the Nudm_SDM_Get Request message to the UDM by using a service-based message, to obtain the user consent information without forwarding by any network element.

S223: The NWDAF sends a response message #2 to the UDM.

The response message #2 responds to the request message #2, and the response message #2 includes a data processing purpose and a corresponding user consent result.

For example, the response message #2 may be referred to as an Nudm_SDM_Get Response message.

The foregoing steps S221 to S223 may be understood as a check procedure that needs to be performed when the NWDAF determines that user consent needs to be checked. If the NWDAF determines that user consent does not need to be checked, the foregoing steps S221 to S223 may be skipped, and the following steps S230 to S280 are directly performed.

S230: The NWDAF determines whether to authorize a data operation corresponding to the request message #1.

In a possible implementation, the NWDAF determines that user consent does not need to be checked, and the NWDAF may directly authorize the data operation corresponding to the request message #1.

In another possible implementation, the NWDAF determines that user consent needs to be checked, and the NWDAF determines, based on the request message #1, the data processing purpose, and the user consent result, whether to authorize the data operation corresponding to the request message.

For example, if the NWDAF determines the data processing purpose (for example, data analytics) based on the request message #1, the NWDAF obtains the user consent result corresponding to the data processing purpose. If the result is "consent", the NWDAF performs authorization, or if the result is not "consent", the NWDAF does not perform authorization.

S240: The NWDAF sends indication information to the NF consumer.

Specifically, if the NWDAF determines, in step S230, not to authorize the data operation corresponding to the request message #1, the indication information indicates that the request of the request message #1 fails; or if the NWDAF determines, in step S230, to authorize the data operation corresponding to the request message #1, the indication information indicates that the request of the request message #1 succeeds.

S250: The NWDAF sends a request message #3 to an NF provider (provider).

The request message #3 is used to request to obtain user data of a terminal device. The request message #3 includes the user identification information.

For example, the NF provider may be a network element that provides data, such as an AMF or an SMF.

For example, the request message #3 may be referred to as an Nnf_EventExposure_Subscribe message.

S260: The NF provider sends a response message #3 to the NWDAF.

The response message #3 responds to the request message #3. The response message #3 includes the user data of the terminal device, for example, location data (for example, a tracking area identity (tracking area identity, TAI)) provided by the AMF and communication data (for example, a communication interval and a communication rate) provided by the SMF.

For example, the response message #3 may be referred to as an Nnf_EventExposure_Notify message.

S270: The NWDAF performs data analytics.

Specifically, the NWDAF analyzes the data based on analytics requested by the NF consumer and by using the collected user data, and finally obtains an analytics result, for example, obtains location statistics information and communication feature information of the UE.

S280: The NWDAF sends a response message #1 to the NF consumer.

The response message #1 responds to the request message #1. The response message #1 includes the analytics result.

For example, the response message #1 may be referred to as an Nnwdaf_AnalysisSubscription_Notify message.

It can be learned from the foregoing user consent check procedure that the data processing purpose in the user consent information is designed for the core network elements (for example, the NWDAF, the NEF, or an EES). These core network elements may directly request the UDM by using the service-based message (for example, Nudm_SDM_Get Request) to obtain the user consent information without forwarding by any network element.

However, with evolution of a 5G network, a RAN may also need to determine whether to collect sensitive information of the user, and this determining process may not need participation of a core network. In this case, the RAN becomes a network element that checks user consent. However, the RAN does not have an interface directly connected to the UDM. In addition, a service continuity problem caused by UE mobility further needs to be considered. Therefore, the foregoing user consent check procedure is not applicable to a scenario in which the RAN performs check.

This application further provides a communication method. A base station obtains user consent information, so that the base station checks user consent.

It should be understood that the method provided in embodiments of this application may be applied to a 5G communication system, for example, the communication system shown in FIG. 1. However, a scenario to which the method can be applied is not limited in embodiments of this application. For example, the method is also applicable to another network architecture including a network element that can implement a corresponding function.

To facilitate understanding of technical solutions in embodiments of this application, before the solutions in embodiments of this application are described based on a 5G architecture, some terms or concepts in 5G that may be used in embodiments of this application are first described.
1. User consent information: The user consent information in this application indicates whether a user consents to some data operations. Specifically, the user consent information includes two parts: a data processing purpose and a user consent result, where the data processing purpose indicates a purpose of a data operation.

For example, the purpose of the data operation includes but is not limited to model training, data analytics, data sharing, non-terrestrial network (Non-terrestrial Network, NTN) location query, RAN data analytics, or RAN data model training. The data processing purpose may indicate that the purpose of the data operation is model training, data analytics, or data sharing.

Optionally, the data processing purpose may also be referred to as a data use purpose, a data obtaining purpose, or the like. A name of information (or a message) in this application is not limited, provided that a corresponding function can be implemented.

The user consent result indicates whether to consent to the purpose of the data operation. For example, granted represents consent, and not granted represents non-consent. For another example, 1 represents consent, and 0 represents non-consent.

For example, the user consent information in this application may further include a network identifier. The network identifier identifies a network that supports the user in consenting or not consenting to the purpose of the data operation. For example, the network identifier may be a public land mobile network PLMN ID.

2. User consent check: The user consent check in this application indicates whether a device (for example, a core network element or a base station) needs to obtain user consent information, and determine, based on the user consent information, whether a purpose of a data operation to be performed by the device is a data processing purpose consented by the user.

3. NTN: Compared with a conventional terrestrial network, the NTN uses typical technologies such as satellites and high-altitude platforms (satellites and High-Altitude Platforms, HAP) for network deployment.

For ease of understanding of embodiments of this application, the following descriptions are provided.

First, in this application, the term "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, stipulated in a protocol), to reduce indication overheads to some extent. In addition, a common part of all pieces of information may be further identified and indicated in a unified manner, to reduce indication overheads caused by separately indicating same information.

Second, "at least one" shown in this application means one or more, and "a plurality of" means two or more. In addition, "first", "second", and various numerical numbers (for example, "#1" and "#2") in embodiments of this application are merely used for differentiation for ease of description, but are not intended to limit the scope of embodiments of this application. Sequence numbers of the following processes do not mean execution sequences. The execution sequences of the processes should be determined based on functions and internal logic of the processes, and should not be construed as any limitation on the implementation processes in embodiments of this application. It should be understood that objects described in this way are interchangeable in proper circumstances, so that solutions other than embodiments of this application can be described. In addition, in embodiments of this application, words such as "S310" and "S410" are merely identifiers for ease of description, and do not limit a sequence of performing steps.

Third, in embodiments of this application, a word such as "example" or "for example" represents giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

Fourth, "being stored" in embodiments of this application may be "being stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, a "protocol" in embodiments of this application may be a standard protocol in the communication field, for example, may include an NR protocol and a related protocol applied to a future communication system. This is not limited in this application.

Sixth, in embodiments of this application, "of (of)", "corresponding (corresponding, related)", "corresponding (corresponding)", and "associate (associate)" are interchangeably used sometimes. It should be noted that, when a difference between the terms is not emphasized, meanings to be expressed are consistent.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

Eighth, in the method flowcharts in the accompanying drawings of this application, dashed boxes indicate optional steps.

Without loss of generality, the following uses interaction between network elements as an example to describe in detail the communication method provided in embodiments of this application.

For ease of description, descriptions are provided below by using an example in which an access and mobility management function network element is an AMF, a terminal device is UE, an access network device is a RAN, and a unified data management network element is a UDM.

It should be noted that a name of a network device is not limited in this application. It should be understood that, for terms and steps in embodiments of this application, reference may be made to each other.

For example, the access and mobility management function network element may be the AMF or another network element that can implement an access and mobility management function.

For another example, the unified data management network element may be the UDM or another network element that can implement a data management function.

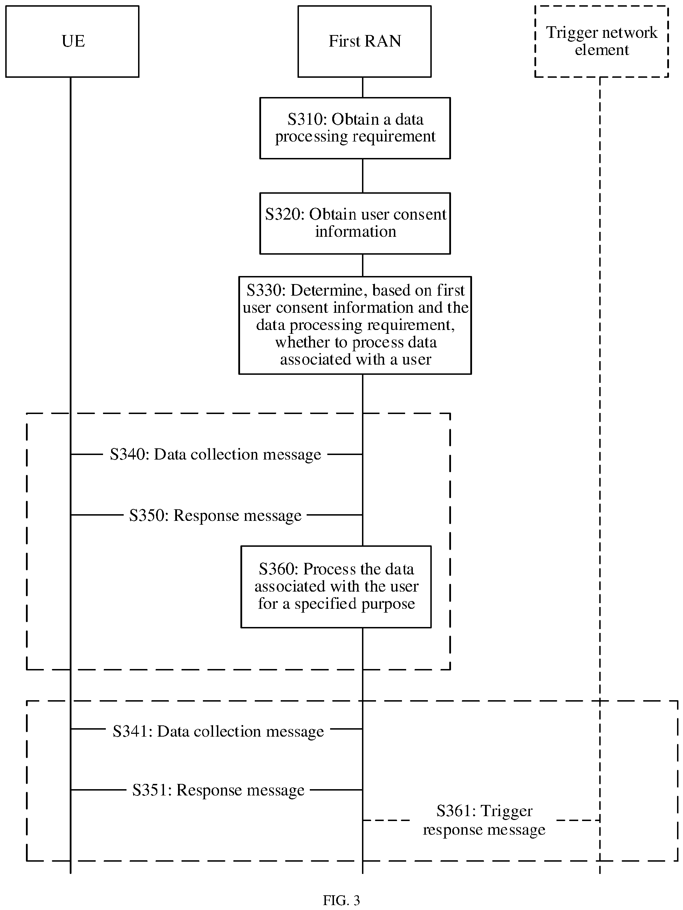

FIG. 3 is a schematic flowchart of a communication method according to an embodiment of this application. The following steps are included.

S310: A first RAN obtains a data processing requirement.

The data processing requirement indicates a requirement for processing data associated with a user for a specified purpose. The specified purpose may be understood as currently obtaining and processing the data associated with the user, and may be referred to as a current processing purpose. The data associated with the user includes data that is associated with the user and that corresponds to the specified purpose.

For example, the data processing requirement indicates a requirement for processing the data associated with the user for "RAN data analytics". This may be understood as that the data processing requirement is used to request to obtain data that is associated with the user and that corresponds to "RAN data analytics" and process the data for "RAN data analytics".

In this embodiment, the data associated with the user includes data generated when the user uses a terminal. Therefore, the data associated with the user may be data of the user, or may be data of the terminal device. For example, the data associated with the user may be data identified by an identifier of the terminal device, for example, location information of the terminal device or the identifier of the terminal device; and/or the data associated with the user may be data identified by an identifier of the user, for example, an ID card number or a mobile number.

It should be noted that, in this embodiment, specific data included in the data associated with the user is not limited, and all data related to the user is collectively referred to as the data associated with the user.

For example, that a first RAN obtains a data processing requirement may be that the first RAN receives the data processing requirement from a trigger network element. The trigger network element may be understood as a network element configured to trigger the first RAN to obtain the data associated with the user, and includes but is not limited to a core network element or a management device.

For example, the first RAN receives a trigger message from the trigger network element. The trigger message is used to trigger the first RAN to obtain the data that is associated with the user and that corresponds to the specified purpose. Optionally, the trigger message includes the foregoing data processing requirement.

Optionally, the trigger message further includes an identifier of a terminal device used by the user or identity information of the user. The identifier of the terminal device identifies the terminal device, and may be a temporary mobile subscriber identity (temporary mobile subscriber identity, S-TMSI), a radio network temporary identifier (Radio Network Temporary Identity, C-RNTI), or the like.

In a possible implementation, the trigger network element is OAM, and the trigger message may be a model training message. In this implementation, the OAM sends the model training message to the first RAN, to trigger the first RAN to obtain data of the UE for model training.

In another possible implementation, the trigger network element is an AMF, and the trigger message may be an N2 message. In this implementation, the AMF sends the N2 message to the first RAN, where the N2 message includes a data processing requirement (for example, requesting NTN location query), to trigger the first RAN to obtain location information of the UE for NTN location query.

In still another possible implementation, the trigger network element is a source RAN, the first RAN is a target RAN (for example, RAN handover occurs), and the trigger message may be an Xn message. In this implementation, the source RAN sends the Xn message to the target RAN, where the Xn message includes a data processing requirement (for example, model training), to trigger the target RAN to obtain data of the UE for model training.

It should be understood that the foregoing several trigger manners are merely examples for describing possible manners of triggering the first RAN to obtain the data that is associated with the user and that corresponds to the specified purpose, and do not constitute any limitation on the protection scope of this application. There may be another trigger manner. Examples are not described herein.

For example, the data processing requirement obtained by the first RAN may be determined by the first RAN based on a configuration of the first RAN.

Specifically, the configuration of the first RAN may include service configuration information of the first RAN. For example, if an administrator determines that the first RAN needs to adjust load balancing at a specific time, after the specific time arrives, the first RAN starts RAN data analytics, to obtain a data processing requirement of "RAN data analytics".

It should be understood that, to protect user information, the first RAN needs to obtain user consent before processing personal information. Specifically, after obtaining the data processing requirement and determining the current specified purpose, the first RAN may determine, based on user consent information, whether the user consents to the first RAN obtaining the data that is associated with the user and that corresponds to the specified purpose, and process, for the specified purpose, the data that is associated with the user and that corresponds to the specified purpose.

For example, after obtaining the data processing requirement, the first RAN may obtain the user consent information, or before obtaining the data processing requirement, the first RAN may obtain the user consent information (for example, obtain the user consent information in advance and store the user consent information locally, and read the user consent information locally when the user consent information needs to be used). The method procedure shown in FIG. 3 further includes the following steps.

S320: The first RAN obtains the user consent information.

The user consent information indicates whether the user consents to process the data associated with the user for a plurality of specified data processing purposes, and any one of the plurality of data processing purposes indicates a purpose of processing the data associated with the user.

That the user consent information indicates whether the user consents to process the data associated with the user for a plurality of specified data processing purposes may be understood as: The user consent information indicates whether the user consents to process the data associated with the user, and the processing is for the plurality of data processing purposes.

For example, the user consent information indicates whether the user consents to process the data associated with the user for "RAN data analytics" and "RAN data model training". Data that is associated with the data and that corresponds to "RAN data analytics" may be the same as or different from data that is associated with the data and that corresponds to "RAN data model training".

For ease of differentiation, the user consent information obtained by the first RAN is referred to as first user consent information below.

The first user consent information includes the plurality of data processing purposes, and any one of the plurality of data processing purposes indicates a purpose of processing the data associated with the user.

For example, the first user consent information includes three data processing purposes: a data processing purpose #1, a data processing purpose #2, and a data processing purpose #3.

For example, the data processing purpose includes but is not limited to NTN location query, NTN admission evaluation, RAN data model training, or RAN data analytics.

For example, the first user consent information includes NTN location query, RAN data model training, and RAN data analytics, and the NTN location query, the RAN data model training, and the RAN data analytics may all be referred to as the data processing purpose.

For example, the first user consent information in this embodiment of this application may be all or a part of user consent information prestored in subscription information of a UDM.

Optionally, the first user consent information includes the plurality of data processing purposes and a plurality of user consent results respectively corresponding to the plurality of data processing purposes. The data processing purpose indicates a purpose of processing the data associated with the user, and includes but is not limited to data analytics, data model training, NTN location query, RAN data analytics, RAN data model sharing, and the like.

The user consent result indicates whether the user consents to a data processing purpose corresponding to the user consent result. One data processing purpose corresponds to one user consent result, that is, each user consent result indicates whether the user consents to the data processing purpose corresponding to the user consent result.

For example, 1 represents consent, and 0 represents non-consent. For another example, granted represents consent, and not granted represents non-consent

Further, the first user consent information may further include an identifier of a first network. The identifier of the first network indicates whether the user consents to process, in the first network, the data associated with the user. Optionally, there may be at least one first network, and the identifier of the first network may be at least one PLMN ID. For example, the identifier of the first network is a PLMN ID list (list).

A specific form of the identifier of the first network is not limited in this embodiment of this application, provided that the identifier can identify the first network.

In a possible implementation, the first user consent information is all of user consent information in subscription information of the UE.

For example, the first user consent information is preconfigured based on contract content when the user signs a contract with an operator. For example, a specific format of the first user consent information is shown in Table 2.

**Table 2**

| Identifier of a first network (optional) | Data processing purpose | User consent result |
|---|---|---|
| PLMN 1 | Data model training | Granted |
| PLMN 1 | Data analytics | Not granted |
| PLMN 2 | NTN location query | Not granted |
| PLMN 2 | RAN data model training | Granted |

In another possible implementation, the first user consent information is a part of user consent information in subscription information of the UE.

For example, the user consent information indicated in the subscription information of the UE may be classified into two types. One type is user consent information that can be identified by a core network element, for example, user consent information in which a data processing purpose is data analytics and data model sharing.

The other type is user consent information that can be identified by a RAN, for example, user consent information in which a data processing purpose is NTN location query and RAN data model sharing. A specific format is shown in Table 3 and Table 4.

**Table 3: User consent information that can be identified by a core network element**

| Identifier of a first network (optional) | Data processing purpose | User consent result |
|---|---|---|
| PLMN 1 | Data model training | Granted |
| PLMN 1 | Data analytics | Not granted |

**Table 4: User consent information that can be identified by a RAN**

| Identifier of a first network (optional) | Data processing purpose | User consent result |
|---|---|---|
| PLMN 2 | NTN location query | Not granted |
| PLMN 2 | RAN data model training | Granted |

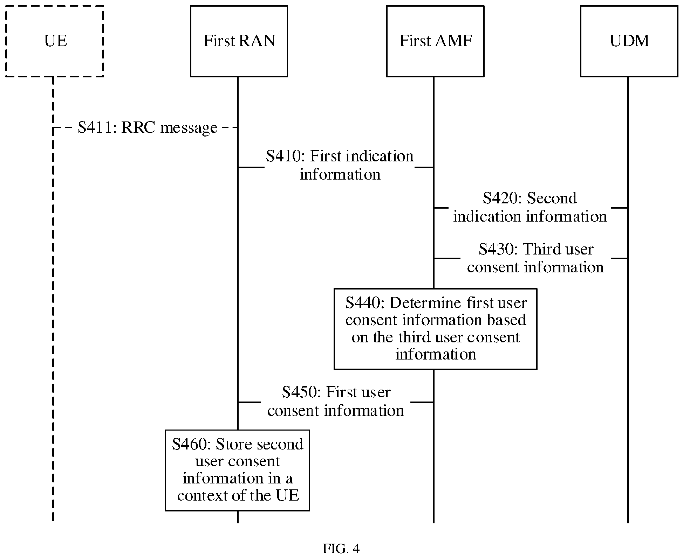

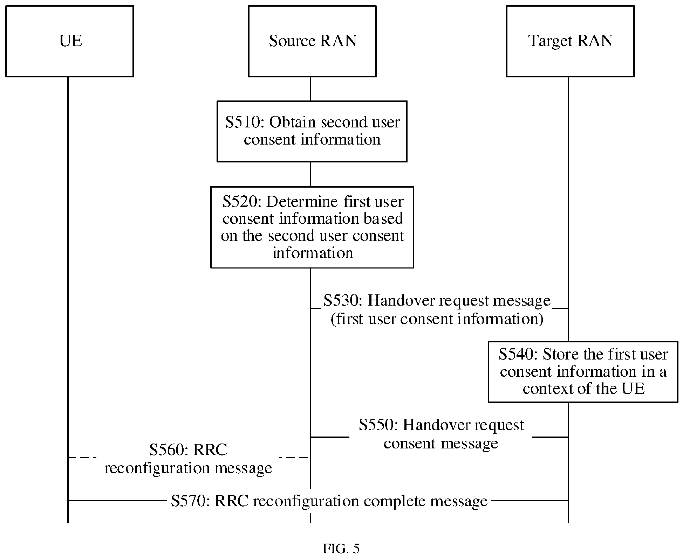

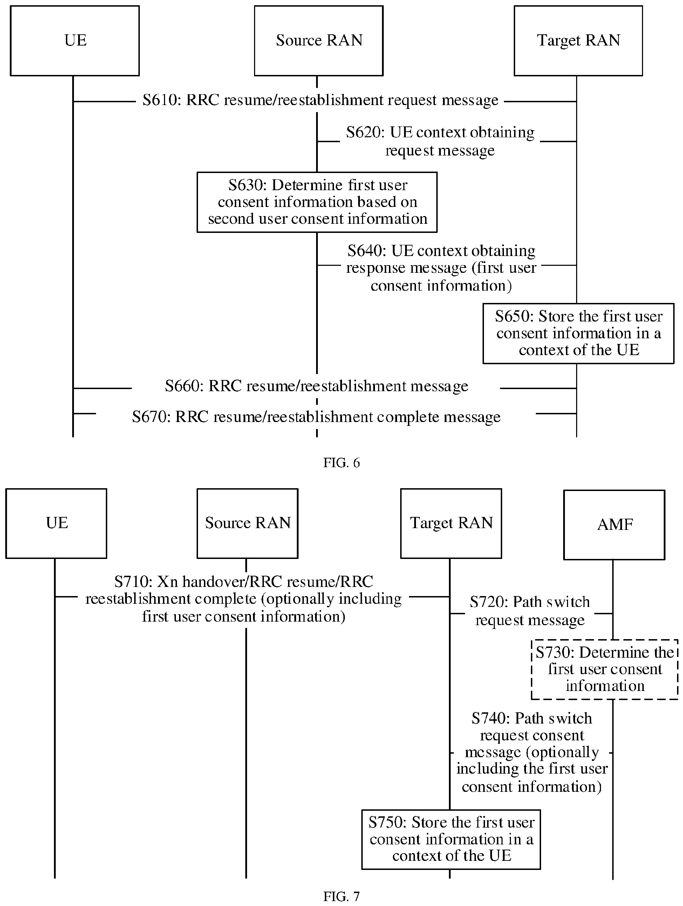

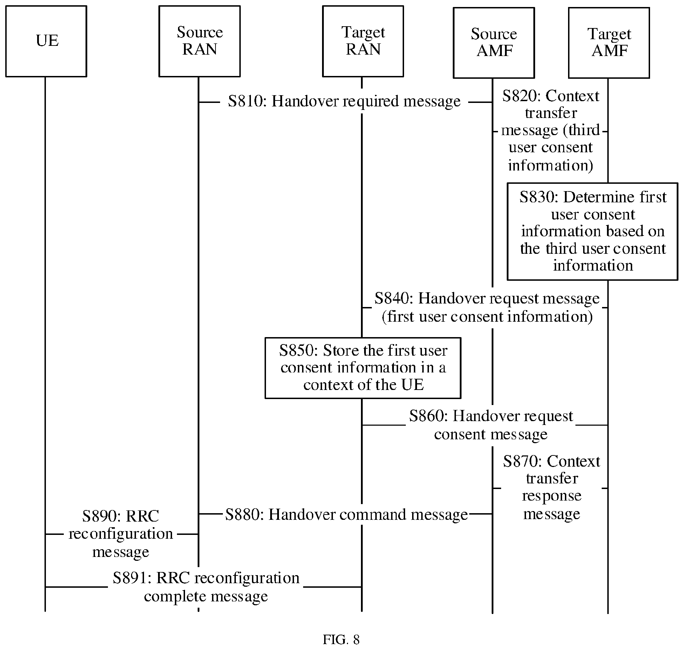

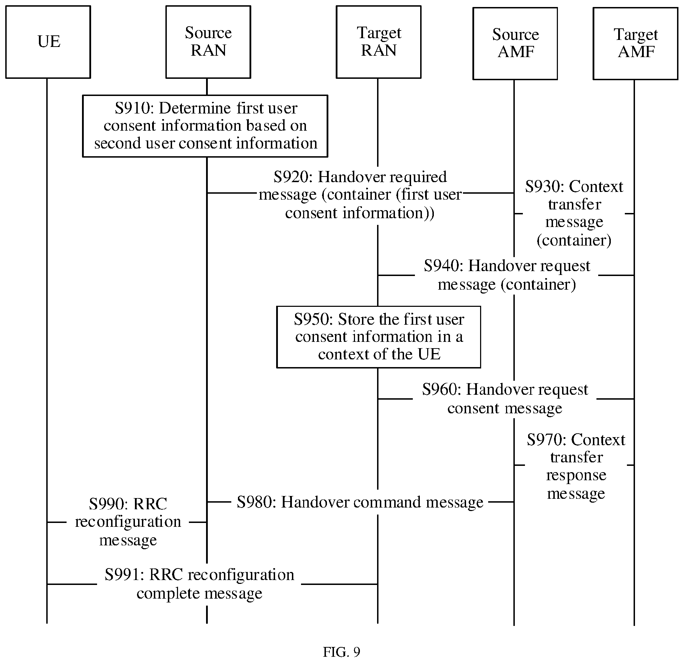

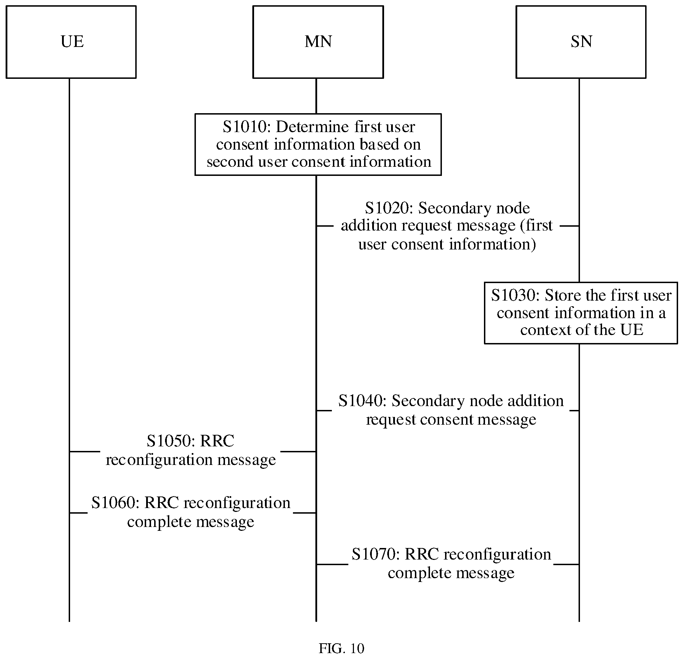

For example, in this application, the first RAN may obtain the first user consent information in the following manners:
Manner 1: In an initial access procedure of the terminal device, the first RAN receives the first user consent information from an AMF. With reference to FIG. 4, the following describes in detail how the first RAN obtains the first user consent information in Manner 1. Details are not described herein.
Manner 2: In an Xn handover scenario, the first RAN is a target RAN, and a second RAN is a source RAN. The first RAN receives the first user consent information from the second RAN. With reference to FIG. 5, the following describes in detail how the first RAN obtains the first user consent information in Manner 2. Details are not described herein.
Manner 3: In a resume, reestablishment, and handover scenario, the first RAN is a target RAN, and a second RAN is a source RAN. The first RAN receives the first user consent information from the second RAN. With reference to FIG. 6, the following describes in detail how the first RAN obtains the first user consent information in Manner 3. Details are not described herein.
Manner 4: In an Xn handover, RRC resume, or RRC reestablishment scenario, the first RAN is a target RAN, and the first RAN receives the first user consent information from an AMF. With reference to FIG. 7, the following describes in detail how the first RAN obtains the first user consent information in Manner 4. Details are not described herein.
Manner 5: In an N2 handover scenario, the first RAN is a target RAN, an AMF is a source AMF, and the first RAN receives the first user consent information from the AMF. With reference to FIG. 8 and FIG. 9, the following describes in detail how the first RAN obtains the first user consent information in Manner 5. Details are not described herein.
Manner 6: In a dual connectivity scenario, the first RAN is a secondary node, a second RAN is a master node, and the first RAN receives the first user consent information from the second RAN. With reference to FIG. 10, the following describes in detail how the first RAN obtains the first user consent information in Manner 6. Details are not described herein.

It should be understood that Manner 1 to Manner 6 are merely examples for describing possible manners in which the first RAN obtains the first user consent information, and do not constitute any limitation on the protection scope of this application. The first RAN may alternatively obtain the first user consent information in another manner. Examples are not described herein.

Further, after obtaining the first user consent information and the data processing requirement, the first RAN can check user consent based on the first user consent information. The method procedure shown in FIG. 3 further includes the following steps.

S330: The first RAN determines, based on the first user consent information and the data processing requirement, whether to process the data associated with the user.

Specifically, that the first RAN determines, based on the first user consent information and the data processing requirement, whether to process the data associated with the user includes the following several manners:
Manner 1: The first user consent information includes the plurality of data processing purposes.

In Manner 1, the first RAN determines, by determining whether the specified purpose belongs to the plurality of data processing purposes, whether to process the data associated with the user.

If the specified purpose belongs to the plurality of data processing purposes, the first access network device determines to process the data associated with the user.

If the specified purpose does not belong to the plurality of data processing purposes, the first access network device determines not to process the data associated with the user.

For example, if the specified purpose is RAN data model training, and the first user consent information is shown in Table 5, the first RAN determines to process the data associated with the user.

For another example, if the specified purpose is NTN location query, and the first user consent information is shown in Table 5, the first RAN determines to process the data associated with the user.

For another example, if the specified purpose is RAN data analytics, and the first user consent information is shown in Table 5, the first RAN determines not to process the data associated with the user.

**Table 5: First user consent information**

| Data processing purpose |
|---|
| NTN location query |
| RAN data model training |

Manner 2: The first user consent information includes the plurality of data processing purposes and a plurality of user consent results respectively corresponding to the plurality of data processing purposes, and each of the plurality of data processing purposes corresponds to one user consent result.

In Manner 2, the first RAN determines, by determining whether the specified purpose is a first data processing purpose in the plurality of data processing purposes and whether a user consent result corresponding to the first data processing purpose is "consent", whether to process the data associated with the user.

If the specified purpose is the first data processing purpose in the plurality of data processing purposes and a first user consent result corresponding to the first data processing purpose is "consent", the first access network device determines to process the data associated with the user.

Otherwise, the first access network device determines not to process the data associated with the user. For example, the specified purpose does not belong to the plurality of data processing purposes. For another example, the specified purpose is a first data processing purpose #2 in the plurality of data processing purposes, but a first user consent result corresponding to the first data processing purpose #2 is "non-consent".

For example, if the specified purpose is RAN data model training, and the first user consent information is shown in Table 6, the first RAN determines to process the data associated with the user.

For another example, if the specified purpose is RAN data analytics, and the first user consent information is shown in Table 6, the first RAN determines to process the data associated with the user.

For another example, if the specified purpose is NTN location query, and the first user consent information is shown in Table 6, the first RAN determines not to process the data associated with the user.

**Table 6: First user consent information**

| Data processing purpose | User consent result |
|---|---|
| NTN location query | Not granted |
| RAN data model training | Granted |
| RAN data analytics | Granted |

Manner 3: The first user consent information includes the plurality of data processing purposes and an identifier of a first network, where the identifier of the first network indicates whether the user consents to process, in the first network, the data associated with the user.

In Manner 3, the first RAN determines, by determining whether the specified destination belongs to the plurality of data processing purposes and whether the first access network device belongs to the first network, whether to process the data associated with the user.

If the specified purpose belongs to the plurality of data processing purposes and the first access network device belongs to the first network, the first access network device determines to process the data associated with the user.

Otherwise, the first access network device determines not to process the data associated with the user. For example, the specified purpose does not belong to the plurality of data processing purposes. For another example, the specified purpose belongs to the plurality of data processing purposes, but the first access network device does not belong to the first network.

For example, if the specified purpose is RAN data model training, the identifier of the network to which the first access network device belongs is a PLMN 1, and the first user consent information is shown in Table 7, the first RAN determines to process the data associated with the user.

For another example, the specified purpose is NTN location query, the identifier of the network to which the first access network device belongs is a PLMN 2, and the first user consent information is shown in Table 7, the first RAN determines not to process the data associated with the user.

For another example, the specified purpose is RAN data analytics, and the first user consent information is shown in Table 7, the first RAN determines not to process the data associated with the user.

**Table 7: First user consent information**

| Identifier of a first network | Data processing purpose |
|---|---|
| PLMN 1 | NTN location query |
| PLMN 1 | RAN data model training |

Manner 4: The first user consent information includes the plurality of data processing purposes, a plurality of user consent results respectively corresponding to the plurality of data processing purposes, and an identifier of the first network, where the user consent result indicates whether the user consents to a data processing purpose corresponding to the user consent result, and the identifier of the first network indicates whether the user consents to process, in the first network, the data associated with the user.

In Manner 4, the first RAN determines, by determining whether the specified purpose is a first data processing purpose in the plurality of data processing purposes, whether a user consent result corresponding to the first data processing purpose is "consent", and whether the first access network device belongs to the first network, whether to process the data associated with the user.

If the specified purpose is the first data processing purpose in the plurality of data processing purposes, the user consent result corresponding to the first data processing purpose is "consent", and the first access network device belongs to the first network, the first access network device determines to process the data associated with the user.

Otherwise, the first access network device determines not to process the data associated with the user. That is, when at least one of the foregoing three conditions that the specified purpose is the first data processing purpose in the plurality of data processing purposes, the user consent result corresponding to the first data processing purpose is "consent", and the first access network device belongs to the first network is not met, the first access network device determines not to process the data associated with the user.

For example, if the specified purpose is RAN data model training, the identifier of the network to which the first access network device belongs is a PLMN 1, and the first user consent information is shown in Table 8, the first RAN determines to process the data associated with the user.

For another example, if the specified purpose is RAN data model training, the identifier of the network to which the first access network device belongs is a PLMN 2, and the first user consent information is shown in Table 8, the first RAN determines not to process the data associated with the user.

For another example, if the specified purpose is RAN data analytics, the identifier of the network to which the first access network device belongs is a PLMN 1, and the first user consent information is shown in Table 8, the first RAN determines not to process the data associated with the user.

**Table 8: First user consent information**

| Identifier of a first network | Data processing purpose | User consent result |
|---|---|---|
| PLMN 1 | NTN location query | Not granted |
| PLMN 1 | RAN data model training | Granted |

For example, the foregoing several manners in which the first RAN determines, based on the first user consent information and the data processing requirement, whether to process the data associated with the user may be implemented in the following determining procedure. For example, that the first RAN determines whether to process the data associated with the user includes the following steps:
Step 1: If the first user consent information includes the identifier of the first network, the first RAN determines whether the first RAN belongs to the first network, or the first RAN determines whether an identifier of a network to which the first RAN belongs belongs to the identifier of the first network.

For example, the identifier of the first network in the first user consent information includes a PLMN ID #1 and a PLMN ID #2, and the first RAN determines whether the identifier of the network to which the first RAN belongs is one of the PLMN ID #1 and the PLMN ID #2.

If the identifier of the network to which the first RAN belongs does not belong to the identifier of the first network, the first RAN determines not to obtain data of the terminal device.

If the identifier of the network to which the first RAN belongs belongs to the identifier of the first network, the following step 2a or step 2b continues to be performed.

Step 2a: The first user consent information includes the plurality of data processing purposes and a plurality of user consent results respectively corresponding to the plurality of data processing purposes. The first RAN determines, based on the specified purpose, the plurality of data processing purposes, and the plurality of user consent results, whether to process the data associated with the user.

Specifically, the specified purpose is the first data processing purpose in the plurality of data processing purposes, and the first RAN determines the user consent result corresponding to the first data processing purpose. If the user consent result is "consent", the first RAN determines to process the data associated with the user. If the user consent result is "non-consent", the first RAN determines not to process the data associated with the user.

Step 2b: The first user consent information includes the plurality of data processing purposes. The first RAN determines, based on the specified purpose and the plurality of data processing purposes, whether to process the data associated with the user.

Specifically, the first RAN determines whether the specified destination is one of the plurality of data processing purposes. If the specified purpose is one of the plurality of data processing purposes, the first RAN determines to process the data associated with the user. If the specified purpose is not one of the plurality of data processing purposes, the first RAN determines not to process the data associated with the user.

In a possible implementation, that the first RAN determines to process the data associated with the user may be understood as follows: The first RAN determines to obtain the data associated with the user, and processes the data associated with the user for the specified purpose. In this manner, the first RAN performs the following steps S340 to S360.

S340: The first RAN sends a data collection message to the UE.

The data collection message is used to obtain the data associated with the user.

For example, when the first RAN determines that the obtained data associated with the user includes sensitive information of the UE, the data collection message can be used to obtain the sensitive information of the UE.

For example, the first RAN sends the data collection message to the UE to collect data. The collected data may include sensitive data and non-sensitive data. The sensitive data may include a UE ID, a UE location, and the like. The non-sensitive data may include power of the UE and the like. It should be understood that division of the sensitive data or the non-sensitive data is not limited in this application, and may be preconfigured on the first RAN.

Optionally, the data collection message includes any one of the following messages:
a logged measurement configuration (LoggedMeasurementConfiguration) message, a location measurement indication (LocationMeasurementIndication) message, an RRC reconfiguration (RRCReconfiguration) message, or a UE information request (UEInformationRequest) message.

S350: The first RAN receives a response message from the UE.

Specifically, the response message includes the data associated with the user.

For example, the response message is a MeasurementReport message, a UEInformationResponse message, or the like.

S360: The first RAN processes the data associated with the user for the specified purpose.

For example, the first RAN processes the received data associated with the user for "RAN data analytics".

In another possible implementation, that the first RAN determines not to process the data associated with the user may be understood as follows: The first RAN determines not to obtain the data associated with the user, or the first RAN determines not to obtain the data that is associated with the user and that corresponds to the specified purpose.

The following steps S341 and S351 are performed, to indicate not to obtain the data that is associated with the user and that corresponds to the specified purpose:
S341: The first RAN sends a data collection message to the UE.

The data collection message includes a no-collection indication, and the no-collection indication indicates that the data that is associated with the user and that corresponds to the specified purpose is not to be collected.

For example, the data that is associated with the user and that corresponds to the specified purpose is sensitive data.

When the data collection message is a LoggedMeasurementConfiguration message, if it is determined that sensitive information of the UE is not to be collected, the first RAN may set tce-id in the LoggedMeasurementConfiguration message to an ID that does not include the sensitive information of the UE.

When the data collection message is an RRCReconfiguration message, if it is determined that sensitive information of the UE is not to be collected, the first RAN may set includeCommonLocationInfo of reportConfig in MeasConfig in the RRCReconfiguration message as false, so as not to collect location information of the UE.

When the data collection message is a UEInformationRequest message, if it is determined that sensitive information of the UE is not to be collected, the first RAN may set an IE in the UEInformationRequest message. For example, if mobilityhistoryReoprtReq is set as false or is not carried, mobility history information of the UE is not to be collected.

It should be understood that, in this embodiment, parameters included in the data collection message (for example, the LoggedMeasurementConfiguration message, the RRCReconfiguration message, and the UEInformationRequest message) and definitions of the parameters in the messages are not limited. For details, refer to descriptions in a current protocol. The details are not described herein.

S351: The first RAN receives a response message from the UE.

Specifically, the response message includes first data, and the first data does not include the data that is associated with the user and that corresponds to the specified purpose.

Corresponding to that the first RAN receives the trigger message from the trigger network element, the first RAN may further send a trigger response message to the trigger network element. The method procedure shown in FIG. 3 further includes the following steps.

S361: The first RAN sends the trigger response message to the trigger network element.

The trigger response message includes a cause value, and the cause value indicates that user consent is not obtained or the data that is associated with the user and that corresponds to the specified purpose is not collected.

In the communication method shown in FIG. 3, the first RAN can obtain and use the first user consent information to determine whether to obtain the data associated with the user. In other words, this application provides a procedure in which the RAN checks user consent.

It can be learned from the foregoing descriptions that the first RAN may obtain the first user consent information in a plurality of manners. The following separately describes, with reference to FIG. 4 to FIG. 9, a procedure in which the first RAN obtains the first user consent information.

FIG. 4 is a schematic flowchart of obtaining first user consent information by a first RAN according to an embodiment of this application. The following steps are included.

S411: The first RAN receives an RRC message from UE, or the UE sends an RRC message to the first RAN.

The RRC message includes a registration request (Registration Request) message. The registration request message is used to request registration.

S410: The first RAN sends first indication information to an AMF, or an AMF receives first indication information from the first RAN.

The first indication information indicates to request to obtain user consent information (for example, the user consent information shown in Table 4) used by a RAN. In this embodiment of this application, the user consent information used by the RAN may be understood as user consent information needed by the RAN. The user consent information may also be referred to as user consent information supported by the RAN or user consent information for the RAN.

Optionally, the first indication information may be referred to as a consent request indication.

For example, the first indication information is carried in a first request message, the first request message is an initial UE message (message), and the message includes the registration request message.

In a possible implementation, the first indication information is a newly added information element in the initial UE message (message).

For example, the first RAN may determine, based on a preconfiguration of the first RAN, whether to send the first indication information. In this case, any UE accesses the first RAN, and the first RAN sends the first indication information provided that the first RAN does not locally store a context of the UE. For example, if the first RAN needs to trigger collection of information about the UE, the first RAN uses the initial UE message to carry the first indication information, where the first indication information explicitly indicates the AMF to obtain the user consent information used by the RAN.

Optionally, the first indication information may be 1-bit information. When a bit value is 1, it indicates that the AMF is indicated to obtain user consent information used by the first RAN.

Optionally, the first indication information may be identification information of a network in which the first RAN is located. When the message sent by the first RAN to the AMF carries the identification information of the network in which the first RAN is located, it indicates that the AMF is indicated to obtain user consent information used by the first RAN.

In another possible implementation, the first indication information is an existing information element in the initial UE message.

For example, if the first RAN determines, based on an RRC message (for example, the RRC message carries a UE type indication), that the UE is special-type UE, and the first RAN needs to collect sensitive information (for example, NTN UE) of the UE, the first RAN uses the initial UE message to carry the first indication information based on the RRC message. The first indication information may be an implicit indication. For example, the first indication information is information indicating a special access manner (for example, satellite access).

Further, after the AMF receives the first indication information, the AMF requests, from a UDM based on the first indication information, the user consent information used by the RAN. The method procedure shown in FIG. 4 further includes the following steps.

S420: The AMF sends second indication information to the UDM, or the UDM receives second indication information from the AMF.

The second indication information is used to request the UDM to provide the user consent information used by the RAN. A function of the second indication information is the same as that of the first indication information, and the second indication information may also be referred to as the first indication information, and is only for ease of differentiation. Optionally, the second indication information is carried in a message #1 sent by the AMF to the UDM, and the message #1 further includes user identification information.

For example, the second indication information may be a subscription data type whose value is "user consent for RAN". It should be understood that the second indication information is generated by the AMF based on the received first indication information.

For example, the received first indication information indicates the AMF to obtain the user consent information used by the RAN (for example, the AMF receives a bit value 1 or the identification information of the network in which the first RAN is located), and the AMF generates the second indication information (for example, the AMF generates a subscription data type whose value is "user consent for RAN"), and sends the second indication information to the UDM.

For example, the message #1 may be referred to as an Nudm_SDM_Get Request message.

S430: The AMF receives third user consent information from the UDM, or the UDM sends third user consent information to the AMF.

If the UDM receives the second indication information, the UDM obtains only the user consent information used by the RAN as the third user consent information.

For example, user consent information stored in the UDM may be classified into two types. One type is user consent information that can be identified by a core network element, for example, user consent information in which a data processing purpose is data analytics and data model sharing. The other type is user consent information that can be identified by the RAN, for example, user consent information in which a data processing purpose is NTN location query and RAN data model sharing.

When the UDM receives the second indication information, the UDM may use, as the third user consent information, the user consent information that is in the locally stored user consent information and that can be identified by the RAN.

Specifically, the third user consent information includes a plurality of third data processing purposes and a plurality of third user consent results respectively corresponding to the plurality of third data processing purposes, the third data processing purpose indicates a purpose of processing data from a terminal device, and the third user consent result indicates whether a user consents to the corresponding third data processing purpose.

Optionally, the third user consent information further includes an identifier of a third network, and the identifier of the third network indicates whether the user consents to process, in the third network, the data associated with the user.

For example, the third user consent information may be carried in an Nudm_SDM_Get Response message and sent to the AMF.

S440: The AMF determines the first user consent information based on the third user consent information.

Specifically, after receiving the third user consent information, the AMF may determine the first user consent information based on the third user consent information.

In a possible implementation, the first user consent information is the same as the third user consent information.

In this manner, the AMF may transparently transmit the user consent information without identifying an information element in the third user consent information. In this case, the third user consent information is a container for the AMF, that is, the third user consent information is the same as the first user consent information.

Optionally, in this implementation, the first user consent information includes a plurality of data processing purposes and a plurality of user consent results, and the first user consent information may further include an identifier of a first network. The third user consent information includes a plurality of third data processing purposes and a plurality of third user consent results, and the third user consent information may further include an identifier of a third network. The plurality of third data processing purposes are the same as the plurality of data processing purposes, and the plurality of third user consent results are the same as the plurality of user consent results.

For example, the first user consent information is shown in Table 9a, and the third user consent information is shown in Table 9b.

**Table 9a**

| Identifier of a first network (optional) | Data processing purpose | User consent result |
|---|---|---|
| PLMN 2 | NTN location query | Not granted |
| PLMN 2 | RAN data model training | Granted |

**Table 9b**

| Identifier of a third network (optional) | Third data processing purpose | Third user consent result |
|---|---|---|
| PLMN 2 | NTN location query | Not granted |
| PLMN 2 | RAN data model training | Granted |

In another possible implementation, the first user consent information is partial user consent information in the third user consent information.

In this implementation, the following several possibilities are included.

Possibility 1: The first user consent information includes a plurality of data processing purposes and a plurality of user consent results, and the third user consent information includes a plurality of third data processing purposes and a plurality of third user consent results respectively corresponding to the plurality of third data processing purposes.

That the mobility management network element determines the first user consent information based on the third user consent information includes:
The mobility management network element uses, as the plurality of data processing purposes, a plurality of third data processing purposes corresponding to a plurality of third user consent results whose user consent results are "consent".

The mobility management network element uses, as the plurality of user consent results, a plurality of third user consent results whose user consent results are "consent".

It should be understood that, in Possibility 1, the first user consent information may further include an identifier of a first network, indicating whether the user consents to process, in the first network, the data associated with the user. Similarly, the third user consent information may further include an identifier of a third network, indicating whether the user consents to process, in the third network, the data associated with the user.

For example, the third user consent information is shown in Table 10a, and the first user consent information is shown in Table 10b.

**Table 10a**

| Identifier of a third network (optional) | Third data processing purpose | Third user consent result |
|---|---|---|
| PLMN 2 | NTN location query | Not granted |
| PLMN 2 | RAN data model training | Granted |
| PLMN 2 | RAN data analytics | Granted |

**Table 10b**

| Identifier of a first network (optional) | Data processing purpose | User consent result |
|---|---|---|
| PLMN 2 | RAN data model training | Granted |
| PLMN 2 | RAN data analytics | Granted |

It can be learned from the foregoing descriptions that in Possibility 1, the AMF sends only user consent information in which a third user consent result is "granted". That is, the first user consent information is user consent information remaining after not granted is removed from the third user consent information.

Possibility 2: The first user consent information includes a plurality of data processing purposes, and the third user consent information includes a plurality of third data processing purposes and a plurality of third user consent results respectively corresponding to the plurality of third data processing purposes.

That the mobility management network element determines the first user consent information based on the third user consent information includes:
The mobility management network element uses, as the plurality of data processing purposes, third data processing purposes corresponding to a plurality of third user consent results whose user consent results are "consent".

For example, the third user consent information is shown in Table 10a (and the first column in Table 10a does not exist, that is, the third user consent information does not include the identifier of the third network), and the first user consent information is shown in Table 10c.

**Table 10c**

| Data processing purpose |
|---|
| RAN data model training |
| RAN data analytics |

It can be learned from the foregoing descriptions that in Possibility 2, the AMF sends, to the first RAN based on the third user consent result, only a data processing purpose for which a third user consent result is "granted".

Possibility 3: The first user consent information includes a plurality of data processing purposes and a plurality of user consent results, the third user consent information includes a plurality of third data processing purposes and a plurality of third user consent results respectively corresponding to the plurality of third data processing purposes, and the third user consent information further includes an identifier of a third network, where the identifier of the third network indicates whether the user consents to process, in the third network, the data associated with the user.

That the mobility management network element determines the first user consent information based on the third user consent information includes:
The mobility management network element determines that the first access network device belongs to the third network.

The mobility management network element uses, as the plurality of data processing purposes, third data processing purposes corresponding to a plurality of third user consent results whose user consent results are "consent".

Alternatively, the mobility management network element uses, as the plurality of data processing purposes, a plurality of third data processing purposes corresponding to a network to which the first access network device belongs, and uses, as the plurality of user consent results, a plurality of third user consent results corresponding to the plurality of third data processing purposes.

For example, the third user consent information is shown in Table 11a, an identifier of the network to which the first access network device belongs is a PLMN 1, and the first user consent information is shown in Table 11b.

**Table 11a**

| Third network identifier (optional) | Third data processing purpose | Third user consent result |
|---|---|---|
| PLMN 1 | NTN location query | Granted |
| PLMN 1 | RAN data model training | Not granted |
| PLMN 1 | RAN data analytics | Granted |
| PLMN 2 | RAN data model training | Granted |

**Table 11b**

| Data processing purpose | User consent result |
|---|---|
| NTN location query | Granted |
| RAN data analytics | Granted |

For another example, the third user consent information is shown in Table 11a, an identifier of the network to which the first access network device belongs is a PLMN 1, and the first user consent information is shown in Table 11c.

**Table 11c**

| Data processing purpose | User consent result |
|---|---|
| NTN location query | Granted |
| RAN data model training | Not granted |
| RAN data analytics | Granted |

It can be learned from the foregoing descriptions that in Possibility 3, the AMF determines whether the first RAN belongs to a network indicated by an allowed network identifier, and sends, to the first RAN, only a data processing purpose and a user consent result that are of the network in which the first RAN is located, or sends, to the first RAN, only a data processing purpose and a user consent result that correspond to the network in which the first RAN is located and for which a user consent result is "consent".

Possibility 4: The first user consent information includes a plurality of data processing purposes, the third user consent information includes a plurality of third data processing purposes and a plurality of third user consent results respectively corresponding to the plurality of third data processing purposes, and the third user consent information further includes an identifier of a third network, where the identifier of the third network indicates whether the user consents to process, in the third network, the data associated with the user.

That the mobility management network element determines the first user consent information based on the third user consent information includes:
The mobility management network element determines that the first access network device belongs to the third network.

The mobility management network element uses, as the plurality of data processing purposes, third data processing purposes corresponding to a plurality of third user consent results whose user consent results are "consent".

For example, the third user consent information is shown in Table 11a, an identifier of the network to which the first access network device belongs is a PLMN 1, and the first user consent information is shown in Table 11d.

**Table 11d**

| Data processing purpose |
|---|
| NTN location query |
| RAN data analytics |

It can be learned from the foregoing descriptions that in Possibility 4, the AMF determines whether the first RAN belongs to a network indicated by an allowed network identifier, and sends, to the first RAN, only a data processing purpose for which a user consent result is "granted".

Possibility 5: The first user consent information includes a plurality of data processing purposes and a plurality of user consent results corresponding to the plurality of data processing purposes, the third user consent information includes a plurality of third data processing purposes and a plurality of third user consent results respectively corresponding to the plurality of third data processing purposes, and the third user consent information further includes an identifier of a third network, where the identifier of the third network indicates whether the user consents to process, in the third network, the data associated with the user.

That the mobility management network element determines the first user consent information based on the third user consent information includes:
The mobility management network element determines that the first access network device does not belong to the third network.

The mobility management network element uses the plurality of third data processing purposes as the plurality of data processing purposes.

The mobility management network element determines that a plurality of user consent results respectively corresponding to the plurality of data processing purposes are "non-consent".

For example, the third user consent information is shown in Table 11a, an identifier of the network to which the first access network device belongs is a PLMN 3, and the first user consent information is shown in Table 11e.

**Table 11e**

| Third data processing purpose | Third user consent result |
|---|---|
| NTN location query | Not granted |
| RAN data model training | Not granted |
| RAN data analytics | Not granted |

For example, in possibility 5, the mobility management network element obtains all different data processing purposes in the third user consent information, and because the first access network device does not belong to the third network, the mobility management network element determines that data processing purposes included in the first user consent information are all the different data processing purposes included in the third user consent information, and a plurality of user consent results included in the first user consent information are "non-consent".

It should be understood that, Possibility 1 to Possibility 5 are merely examples for describing a possible case in which the first user consent information is partial user consent information in the third user consent information, and do not constitute any limitation on the protection scope of this application. Examples are not described herein.

Further, after determining the first user consent information, the AMF may send the first user consent information to the first RAN. The method procedure shown in FIG. 4 further includes the following steps.

S450: The AMF sends the first user consent information to the first RAN, or the first RAN receives the first user consent information from the AMF.

For descriptions related to the first user consent information, refer to the descriptions about the first user consent information in FIG. 3.

For example, the AMF may use an initial UE context setup request message to carry second user consent information, and send the initial UE context setup request message to the first RAN.

S460: The first RAN stores the second user consent information in a context of the UE.

FIG. 5 is another schematic flowchart of obtaining first user consent information by a first RAN according to an embodiment of this application. In the embodiment shown in FIG. 5, the first RAN is a target RAN (T-RAN), and a second RAN is a source RAN (S-RAN). In an Xn handover scenario, the target RAN may obtain user consent information from the source RAN. The following steps are included.

S510: The source RAN obtains second user consent information.

The second user consent information includes a plurality of second data processing purposes, and the second data processing purpose indicates a purpose of processing data from a terminal device.

For example, the source RAN may obtain the second user consent information in an initial access procedure (for example, in the procedure shown in FIG. 4, the source RAN is the first RAN in FIG. 4). A specific obtaining process is not described herein again.

S520: The source RAN determines first user consent information based on the second user consent information.

In a possible implementation, the first user consent information is the second user consent information.

In another possible implementation, the first user consent information is different from the second user consent information.

For example, the first user consent information includes a plurality of data processing purposes and a plurality of pieces of user consent information respectively corresponding to the plurality of data processing purposes, and the second user consent information further includes a plurality of second user consent results respectively corresponding to the plurality of second data processing purposes and an identifier of a second network, where the second user consent result indicates whether a user consents to the corresponding second data processing purpose, and the identifier of the second network indicates whether the user consents to process, in the second network, data associated with the user.

That the second access network device determines the first user consent information based on the second user consent information includes:
The second access network device determines that the first access network device does not belong to the second network.

The second access network device uses the plurality of second data processing purposes as the plurality of data processing purposes.

The second access network device determines that the plurality of user consent results respectively corresponding to the plurality of data processing purposes are "non-consent".

For example, the second user consent information is shown in Table 12a, an identifier of the network to which the first access network device belongs is a PLMN 3, and the first user consent information is shown in Table 12b.

**Table 12a**

| Identifier of a second network | Second data processing purpose | Second user consent result |
|---|---|---|
| PLMN 1 | NTN location query | Granted |
| PLMN 1 | AI/ML analytics | Not granted |
| PLMN 2 | NTN location query | Not granted |
| PLMN 2 | MDT optimization | Granted |

**Table 12b**

| Data processing purpose | User consent result |
|---|---|
| NTN location query | Not granted |
| AI/ML analytics | Not granted |
| | |
| MDT optimization | Not granted |

S530: The source RAN sends a handover request (Handover Request) message to the target RAN.

The handover request message includes the first user consent information.

S540: The target RAN stores the first user consent information in a context of UE.

S550: The target RAN sends a handover request acknowledgment (Handover Request ACK) message to the source RAN.

The handover request acknowledgment message includes an RRC reconfiguration (RRC Reconfiguration) message.

S560: The source RAN sends the RRC reconfiguration message to the UE.

S570: The UE returns an RRC reconfiguration complete (RRC Reconfiguration Complete) message to the target RAN.

FIG. 6 is another schematic flowchart of obtaining first user consent information by a first RAN according to an embodiment of this application. In the embodiment shown in FIG. 6, the first RAN is a target RAN (T-RAN), and a second RAN is a source RAN (S-RAN). In an RRC resume, reestablishment, and handover scenario, the target RAN may obtain user consent information from the source RAN. The following steps are included.

S610: UE sends an RRC resume/reestablishment request (RRC Resume/Reestablishment Request) message to the target RAN.

S620: The target RAN sends a UE context obtaining request (UE Context Retrieve Request) message to the source RAN.

S630: The source RAN determines first user consent information based on second user consent information.

For details, refer to the descriptions of S520. The details are not described herein again.

S640: The source RAN sends a UE context acquisition response (UE Context Retrieve Response) message to the target RAN.

The UE context obtaining response message includes the first user consent information.

S650: The target RAN stores the first user consent information in a context of the UE.

S660: The target RAN sends an RRC resume/reestablishment (RRC Resume/Reestablishment) message to the UE.

S670: The UE returns an RRC resume/reestablishment complete (RRC Resume/Reestablishment Complete) message to the target RAN.

FIG. 7 is another schematic flowchart of obtaining first user consent information by a first RAN according to an embodiment of this application. In the embodiment shown in FIG. 7, the first RAN is a target RAN (T-RAN), and a second RAN is a source RAN (S-RAN). In an Xn handover, RRC resume, or RRC reestablishment scenario, the target RAN may obtain user consent information from an AMF. The following steps are included.

S710: Xn handover/RRC resume/RRC reestablishment complete.

S720: The target RAN sends a path switch request (Path Switch Request) message to the AMF.

Optionally, the path switch request includes third indication information.

In a possible implementation, the third indication information is the same as the first indication information in the embodiment shown in FIG. 4.

In this implementation, the target RAN in this embodiment may be understood as the first RAN in the embodiment shown in FIG. 4.

For example, in this embodiment, if the target RAN determines, based on an obtained context of UE, that the UE is UE of a special type (the RAN needs to collect sensitive information of the UE, for example, NTN UE), the RAN uses the path switch request message to carry the third indication information based on context information.

In another possible implementation, if the Xn handover procedure shown in step S710 is the procedure shown in FIG. 5, or the RRC resume procedure or the RRC reestablishment procedure shown in step S710 is the procedure shown in FIG. 6, that is, the target RAN obtains first user consent information from the source RAN, the third indication information may be further the first user consent information (denoted as first user consent information #1 for ease of differentiation), and is used by the AMF to determine whether the first user consent information #1 is modified.

S730: The AMF determines the first user consent information.

In a possible implementation, if a context of the AMF includes the third user consent information, the AMF determines the first user consent information based on the third user consent information.

In another possible implementation, the AMF receives third indication information, where the third indication information is the same as the first indication information in the embodiment shown in FIG. 4. In addition, if the context of the AMF includes the third user consent information, the AMF determines the first user consent information based on the third user consent information.

Specifically, for determining the first user consent information by the AMF based on the third user consent information, refer to step S440 in the embodiment shown in FIG. 4. Details are not described herein again.

In still another possible implementation, the AMF receives third indication information, where the third indication information is first user consent information #1, and a context of the AMF includes the third user consent information. The AMF determines whether the first user consent information #1 is the same as the third user consent information, and if the first user consent information #1 is different from the third user consent information, determines that user consent information to be sent to the first RAN is the third user consent information; or if the first user consent information #1 is the same as the third user consent information, determines not to send the user consent information to the first RAN; or if the first user consent information #1 is the same as the third user consent information, determines to send the first user consent information #1 to the first RAN
For ease of differentiation, in this implementation, the user consent information received by the AMF is the first user consent information #1, and the user consent information sent by the AMF to the first RAN is denoted as the first user consent information (for example, the third user consent information or the first user consent information #1 is collectively referred to as the first user consent information).

For example, the first user consent information #1 received by the AMF is shown in Table 13a, and the third user consent information included in the context of the AMF is shown in Table 13b. In this case, the first user consent information sent by the AMF to the first RAN is shown in Table 13b. For another example, the first user consent information #1 received by the AMF is shown in Table 13a, and the third user consent information included in the context of the AMF is also shown in Table 13a. In this case, the AMF determines not to send the user consent information to the first RAN. Alternatively, the first user consent information sent by the AMF to the first RAN is shown in Table 13a.

**Table 13a**

| Identifier of a second network | Second data processing purpose | Second user consent result |
|---|---|---|
| PLMN 1 | NTN location query | Granted |
| PLMN 1 | AI/ML analytics | Not granted |
| PLMN 2 | NTN location query | Not granted |
| PLMN 2 | MDT optimization | Granted |

**Table 13b**

| Identifier of a second network | Second data processing purpose | Second user consent result |
|---|---|---|
| PLMN 1 | NTN location query | Granted |
| PLMN 1 | AI/ML analytics | Granted |
| PLMN 2 | NTN location query | Not granted |
| PLMN 2 | MDT optimization | Granted |

S740: The AMF sends a path switch request acknowledgment (Path Switch Request ACK) message to the target RAN.

Optionally, the path switch request acknowledgment message includes the first user consent information.

S750: The target RAN stores the first user consent information in a context of UE.

In a possible implementation, if the Xn handover procedure shown in step S710 is the procedure shown in FIG. 5, the target RAN obtains the first user consent information from the source RAN, and the target RAN may store the first user consent information in the context of the UE when determining that the first user consent information obtained from the source RAN is trusted.

In another possible implementation, the target RAN obtains the first user consent information from the AMF by using the path switch requestacknowledgment message.

FIG. 8 is another schematic flowchart of obtaining first user consent information by a first RAN according to an embodiment of this application. In the embodiment shown in FIG. 8, the first RAN is a target RAN (T-RAN), and a second RAN is a source RAN (S-RAN). In an Xn handover scenario, the target RAN may obtain user consent information from a source AMF. The following steps are included.

S810: The source RAN sends a handover required (Handover Required) message to the source AMF.

S820: The source AMF sends a context transfer message to a target AMF.

The context transfer message includes third user consent information (for example, the source AMF may receive the third user consent information from the UDM in the procedure shown in FIG. 4).

S830: The target AMF determines first user consent information based on the third user consent information.

In a possible implementation, the first user consent information is the third user consent information.

In a possible implementation, the first user consent information is different from the third user consent information.

For example, the first user consent information includes a plurality of data processing purposes and a plurality of user consent results, and the third user consent information includes a plurality of third data processing purposes, a plurality of third user consent results, and an identifier of a third network, where the identifier of the third network indicates whether a user consents to process, in the third network, data associated with the user.

That the target AMF determines whether the target RAN belongs to the third network, and if the target RAN does not belong to the third network, the target AMF obtains the first user consent information by modifying the third user consent information includes:

The AMF uses the plurality of third data processing purposes as the plurality of data processing purposes.

The AMF determines that the plurality of user consent results respectively corresponding to the plurality of data processing purposes are "non-consent".

For example, the third user consent information is shown in Table 14a, an identifier of the network to which the target RAN belongs is a PLMN 3, and the first user consent information is shown in Table 14b.

**Table 14a**

| Identifier of a third network | Third data processing purpose | Third user consent result |
|---|---|---|
| PLMN 1 | NTN location query | Granted |
| PLMN 1 | AI/ML analytics | Not granted |
| PLMN 2 | NTN location query | Not granted |
| PLMN 2 | MDT optimization | Granted |

**Table 14b**

| Data processing purpose | User consent result |
|---|---|
| NTN location query | Not granted |
| AI/ML analytics | Not granted |
| | |
| MDT optimization | Not granted |

S840: The target AMF sends a handover request (Handover Request) message to the target RAN.

The handover request message includes the first user consent information.

S850: The target RAN stores the first user consent information in a context of UE.

S860: The target RAN sends a handover request acknowledgment (Handover Request ACK) message to the target AMF.

S870: The target AMF sends a context transfer response message to the source AMF.

S880: The source AMF sends a handover command (Handover Command) message to the source RAN.

S890: The source RAN sends an RRC reconfiguration (RRC Reconfiguration) message to the UE.

S891: The UE sends an RRC reconfiguration complete (RRC Reconfiguration Complete) message to the target RAN.

FIG. 9 is another schematic flowchart of obtaining first user consent information by a first RAN according to an embodiment of this application. In the embodiment shown in FIG. 9, the first RAN is a target RAN (T-RAN), and a second RAN is a source RAN (S-RAN). In an Xn handover scenario, the target RAN may obtain user consent information from a source AMF. The following steps are included.

S910: The source RAN determines first user consent information based on second user consent information.

For details, refer to the descriptions of step S820 in FIG. 5. The details are not described herein again.

S920: The source RAN sends a handover required (Handover Required) message to the source AMF.

The handover required message includes the first user consent information.

For example, the handover required message includes a source-to-target container (Source-to-Target Container), and the container includes the first user consent information.

S930: The source AMF sends a context transfer message to the target AMF.

The context transfer message includes the first user consent information. For example, the context transfer message includes the source-to-target container.

S940: The target AMF sends a handover request (Handover Request) message to the target RAN.

The handover request message includes the first user consent information. For example, the handover request message includes the source-to-target container.

S950: The target RAN stores the first user consent information in a context of UE.

S960: The target RAN sends a handover request acknowledgment (Handover Request ACK) message to the target AMF.

S970: The target AMF sends a context transfer response message to the source AMF.

S980: The source AMF sends a handover command (Handover Command) message to the source RAN.

S990: The source RAN sends an RRC reconfiguration (RRC Reconfiguration) message to the UE.

S991: The UE sends an RRC reconfiguration complete (RRC Reconfiguration Complete) message to the target RAN.

FIG. 10 is another schematic flowchart of obtaining first user consent information by a first RAN according to an embodiment of this application. In the embodiment shown in FIG. 10, the first RAN is a secondary node (SN), and a second RAN is a master node (MN). In a dual connectivity scenario, the secondary node may obtain user consent information from the master node. The following steps are included.

S1010: The MN determines first user consent information based on second user consent information.

For details, refer to the descriptions of step S820 in FIG. 5. The details are not described herein again.

S1020: The MN sends a secondary node addition request (SN Addition Request) message to the SN.

The secondary node addition request message includes the first user consent information.

S1030: The SN stores the first user consent information in a context of UE.

S1040: The SN sends a secondary node addition request acknowledgment (SN Addition Request ACK) message to the MN.

S1050: The MN sends an RRC reconfiguration (RRC Reconfiguration) message to the UE.

S1060: The UE sends an RRC reconfiguration complete (RRC Reconfiguration Complete) message to the MN.

S1070: The MN sends the RRC reconfiguration complete message to the SN.

The foregoing embodiment relates to determining whether the first RAN belongs to a network. For example, the AMF determines whether the first RAN belongs to a network. For another example, the source RAN determines whether the target RAN belongs to a network. For another example, the master node determines whether the secondary node belongs to a network.

For example, whether the first RAN belongs to a network may be determined in the following determining manner:
When establishing a connection to the first RAN, an AMF obtains an identifier of the first RAN (for example, which may be obtained from the message sent in S410, or may be obtained before S410), and obtains, from the identifier of the first RAN, an identifier PLMN ID of the network to which the first RAN belongs. Therefore, whether the first RAN belongs to a network can be determined.

For example, when the identifier of the network to which the first RAN belongs is a PLMN ID #1, and the identifier of the network to which the first RAN belongs is currently determined as a PLMN ID #2, it may be determined that the first RAN does not belong to the network.

It should be noted that how to obtain identification information of the network to which the first RAN belongs is not limited in this embodiment of this application.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, the network device or the terminal device) in an existing network architecture is mainly used as an example for description. It should be understood that a specific form of the device is not limited in embodiments of this application. For example, all devices that can implement a same function in the future are usable in embodiments of this application.

It may be understood that in the foregoing method embodiments, the methods and operations implemented by the network device may alternatively be implemented by a component that may be used in the network device, and the methods and operations implemented by the terminal device may alternatively be implemented by a component that may be used in the terminal device.

The foregoing describes, in detail with reference to FIG. 3 to FIG. 10, the communication methods provided in embodiments of this application. The communication method is mainly described from the perspective of interaction between the network device and the terminal device. It may be understood that to implement the foregoing functions, the network device and the terminal device include corresponding hardware structures and/or software modules for implementing the functions.

A person skilled in the art should be able to be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for the particular application, but it should not be considered that the implementation goes beyond the scope of this application.

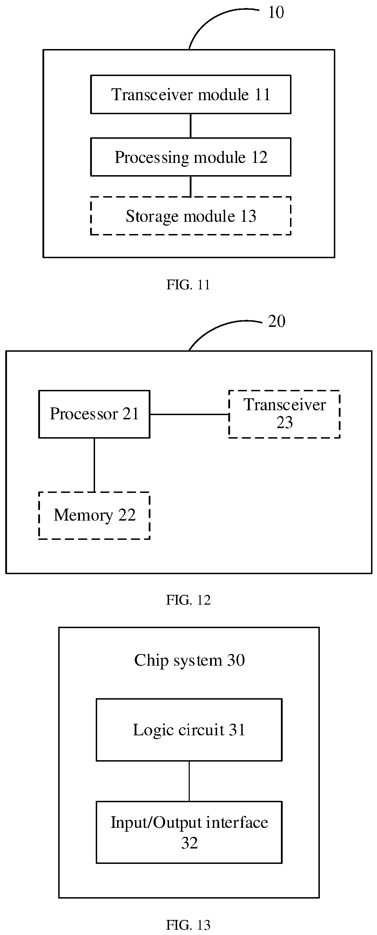

The following describes, in detail with reference to FIG. 11 to FIG. 13, communication apparatuses provided in embodiments of this application. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. Descriptions are provided below by using an example in which each functional module is obtained through division based on each corresponding function.

FIG. 11 is a schematic block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the first RAN in the foregoing method embodiment, or may be a component (for example, a chip) of the first RAN.

The apparatus 10 may implement a corresponding step or procedure performed by the first RAN in the foregoing method embodiments. The transceiver module 11 may be configured to perform receiving and sending related operations of the first RAN in the foregoing method embodiments. The processing module 12 may be configured to perform a processing related operation of the first RAN in the foregoing method embodiments.

In a possible implementation, the transceiver module 11 is configured to obtain a data processing requirement, where the data processing requirement indicates a requirement for processing data associated with a user for a specified purpose.

The processing module 12 is configured to determine, based on user consent information and the data processing requirement, whether to process the data associated with the user for the specified purpose, where the user consent information indicates whether the user consents to process the data associated with the user for a plurality of specified data processing purposes, and any one of the plurality of data processing purposes indicates a purpose of processing the data associated with the user.

When the apparatus 10 is configured to perform the method in FIG. 3, the transceiver module 11 may be configured to perform steps of sending information in the method, for example, steps S340, S350, S341, S351, and S361; and the processing module 12 may be configured to perform processing steps in the method, for example, steps S310, S320, S330, and S360.

When the apparatus 10 is configured to perform the method in FIG. 4, the transceiver module 11 may be configured to perform steps of receiving and sending information in the method, for example, steps S411, S410, and S450; and the processing module 12 may be configured to perform a processing step in the method, for example, step S460.

When the apparatus 10 is configured to perform the method in FIG. 5, the transceiver module 11 may be configured to perform steps of receiving and sending information in the method, for example, steps S530 and S550; and the processing module 12 may be configured to perform a processing step in the method, for example, step S540.

When the apparatus 10 is configured to perform the method in FIG. 6, the transceiver module 11 may be configured to perform steps of receiving and sending information in the method, for example, steps S610, S620, S640, S660, and S670; and the processing module 12 may be configured to perform a processing step in the method, for example, step S650.

When the apparatus 10 is configured to perform the method in FIG. 7, the transceiver module 11 may be configured to perform steps of receiving and sending information in the method, for example, steps S710, S720, and S740; and the processing module 12 may be configured to perform a processing step in the method, for example, step S750.

When the apparatus 10 is configured to perform the method in FIG. 8, the transceiver module 11 may be configured to perform steps of receiving and sending information in the method, for example, steps S840, S860, and S870; and the processing module 12 may be configured to perform a processing step in the method, for example, step S850.

When the apparatus 10 is configured to perform the method in FIG. 9, the transceiver module 11 may be configured to perform steps of receiving and sending information in the method, for example, steps S940, S960, and S970; and the processing module 12 may be configured to perform a processing step in the method, for example, step S950.

When the apparatus 10 is configured to perform the method in FIG. 10, the transceiver module 11 may be configured to perform steps of receiving and sending information in the method, for example, steps S1020, S1040, and S1070; and the processing module 12 may be configured to perform a processing step in the method, for example, step S1030.

It should be understood that a specific process in which the units perform the foregoing corresponding steps is described in detail in the foregoing method embodiments. For brevity, details are not described herein again.

In a second design, the apparatus 10 may correspond to the second RAN in the foregoing method embodiment, or may be a component (for example, a chip) of the second RAN.

The apparatus 10 may implement a corresponding step or procedure performed by the second RAN in the foregoing method embodiments. The transceiver module 11 may be configured to perform receiving and sending related operations of the second RAN in the foregoing method embodiments. The processing module 12 may be configured to perform a processing related operation of the second RAN in the foregoing method embodiments.

In a possible implementation, the transceiver module 11 is configured to obtain second user consent information, where the second user consent information indicates whether a user consents to process data associated with the user for a plurality of specified second data processing purposes, and any one of the plurality of second data processing purposes indicates a purpose of processing the data associated with the user.

The processing module 12 is configured to determine user consent information based on the second user consent information. The transceiver unit is configured to send the user consent information to a first access network device, where the user consent information indicates whether the user consents to process the data associated with the user for a plurality of specified data processing purposes, and any one of the plurality of data processing purposes indicates a purpose of processing the data associated with the user.

When the apparatus 10 is configured to perform the method in FIG. 5, the transceiver module 11 may be configured to perform steps of receiving and sending information in the method, for example, steps S530, S550, S560, and S570; and the processing module 12 may be configured to perform processing steps in the method, for example, steps S510 and S520.

When the apparatus 10 is configured to perform the method in FIG. 6, the transceiver module 11 may be configured to perform steps of receiving and sending information in the method, for example, steps S620 and S640; and the processing module 12 may be configured to perform a processing step in the method, for example, step S630.

When the apparatus 10 is configured to perform the method in FIG. 7, the transceiver module 11 may be configured to perform steps of receiving and sending information in the method; and the processing module 12 may be configured to perform a processing step in the method.

When the apparatus 10 is configured to perform the method in FIG. 8, the transceiver module 11 may be configured to perform steps of receiving and sending information in the method, for example, steps S810, S890, and S891; and the processing module 12 may be configured to perform a processing step in the method.

When the apparatus 10 is configured to perform the method in FIG. 9, the transceiver module 11 may be configured to perform steps of receiving and sending information in the method, for example, steps S920, S980, S990, and S991; and the processing module 12 may be configured to perform a processing step in the method, for example, step S910.

When the apparatus 10 is configured to perform the method in FIG. 10, the transceiver module 11 may be configured to perform steps of receiving and sending information in the method, for example, steps S1020, S1040, S1050, S1060 and S1070; and the processing module 12 may be configured to perform a processing step in the method, for example, step S1010.

It should be understood that a specific process in which the units perform the foregoing corresponding steps is described in detail in the foregoing method embodiments. For brevity, details are not described herein again.

In a third design, the apparatus 10 may correspond to the AMF in the foregoing method embodiment, or may be a component (for example, a chip) of the AMF.

The apparatus 10 may implement a corresponding step or procedure performed by the AMF in the foregoing method embodiments. The transceiver module 11 may be configured to perform receiving and sending related operations of the AMF in the foregoing method embodiments. The processing module 12 may be configured to perform a processing related operation of the AMF in the foregoing method embodiments.

In a possible implementation, the transceiver module 11 is configured to send first indication information to a unified data management network element, where the first indication information indicates to obtain user consent information used by an access network device.

The transceiver module 11 is further configured to receive third user consent information from the unified data management network element.

The processing module 12 is configured to determine user consent information based on the third user consent information.

The transceiver module 11 is further configured to send the user consent information to a first access network device, where the third user consent information indicates whether a user consents to process data associated with the user for a plurality of specified third data processing purposes, and any one of the plurality of third data processing purposes indicates a purpose of processing the data associated with the user; and the user consent information indicates whether the user consents to process the data associated with the user for a plurality of specified data processing purposes, and any one of the plurality of data processing purposes indicates a purpose of processing the data associated with the user.

When the apparatus 10 is configured to perform the method in FIG. 4, the transceiver module 11 may be configured to perform steps of receiving and sending information in the method, for example, steps S410, S420, S430, and S450; and the processing module 12 may be configured to perform a processing step in the method, for example, step S440.

When the apparatus 10 is configured to perform the method in FIG. 7, the transceiver module 11 may be configured to perform steps of receiving and sending information in the method, for example, steps S720 and S740; and the processing module 12 may be configured to perform a processing step in the method, for example, step S730.

When the apparatus 10 is configured to perform the method in FIG. 8, the transceiver module 11 may be configured to perform steps of receiving and sending information in the method, for example, steps S810, S820, and S870; and the processing module 12 may be configured to perform a processing step in the method.

When the apparatus 10 is configured to perform the method in FIG. 9, the transceiver module 11 may be configured to perform steps of receiving and sending information in the method, for example, steps S920, S930, S970, and S991; and the processing module 12 may be configured to perform a processing step in the method.

It should be understood that a specific process in which the units perform the foregoing corresponding steps is described in detail in the foregoing method embodiments. For brevity, details are not described herein again.

In a fourth design, the apparatus 10 may correspond to the UDM in the foregoing method embodiment, or may be a component (for example, a chip) of the UDM.

The apparatus 10 may implement a corresponding step or procedure performed by the UDM in the foregoing method embodiments. The transceiver module 11 may be configured to perform receiving and sending related operations of the UDM in the foregoing method embodiments. The processing module 12 may be configured to perform a processing related operation of the UDM in the foregoing method embodiments.

In a possible implementation, the transceiver module 11 is configured to receive first indication information, where the first indication information indicates to obtain user consent information used by an access network device.

The processing module 12 is configured to determine, from subscription data of a user, the user consent information used by the access network device.

The transceiver module 11 is configured to send third user consent information, where the subscription data of the user includes the user consent information used by the access network device and user information used by a core network device, the user consent information used by the access network device and the user information used by the core network device are two different types of user consent information, and the user consent information used by the access network device is the third user consent information, or the user consent information used by the access network device is partial user consent information in the third user consent information; and the third user consent information indicates whether the user consents to process data associated with the user for a plurality of specified third data processing purposes, and any one of the plurality of third data processing purposes indicates a purpose of processing the data associated with the user.

When the apparatus 10 is configured to perform the method in FIG. 4, the transceiver module 11 may be configured to perform steps of receiving and sending information in the method, for example, steps S420 and S430; and the processing module 12 may be configured to perform a processing step in the method.

It should be understood that a specific process in which the units perform the foregoing corresponding steps is described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform the procedures and/or the steps corresponding to the mobility management network element in the foregoing method embodiments. Alternatively, the apparatus 10 may be specifically the terminal device in the foregoing embodiments, and may be configured to perform the procedures and/or the steps corresponding to the terminal device in the foregoing method embodiments. To avoid repetition, details are not described herein again.

The apparatus 10 in the foregoing solutions has a function of implementing the corresponding step performed by the device (for example, the mobility management network element, the session management network element, the relay terminal device, or the remote terminal device) in the foregoing methods. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in the method embodiments.

In addition, the transceiver module 11 may be a transceiver circuit (for example, may include a receiver circuit and a transmitter circuit), and the processing module may be a processing circuit.

FIG. 12 is a diagram of another communication apparatus 20 according to an embodiment of this application. The apparatus 20 includes a processor 21. The processor 21 is configured to: execute a computer program or instructions stored in a memory 22, or read data/signaling stored in the memory 22, to perform the methods in the foregoing method embodiments. Optionally, there are one or more processors 21.

Optionally, as shown in FIG. 12, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 12, the apparatus 20 further includes a transceiver 23, and the transceiver 23 is configured to: receive and/or send a signal. For example, the processor 21 is configured to control the transceiver 23 to receive and/or send a signal.

In a solution, the apparatus 20 is configured to implement operations performed by the first RAN in the foregoing method embodiments.

In another solution, the apparatus 20 is configured to implement operations performed by the second RAN in the foregoing method embodiments.

In another solution, the apparatus 20 is configured to implement operations performed by the AMF in the foregoing method embodiments.

In another solution, the apparatus 20 is configured to implement operations performed by the UDM in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another suitable type.

FIG. 13 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first RAN in the foregoing method embodiments.

For example, the logic circuit 31 is configured to implement a processing-related operation performed by the first RAN in the foregoing method embodiments, and the input/output interface 32 is configured to implement a sending and/or receiving-related operation performed by the first RAN in the foregoing method embodiments.

In another solution, the chip system 30 is configured to implement operations performed by the second RAN in the foregoing method embodiments.

For example, the logic circuit 31 is configured to implement a processing-related operation performed by the second RAN in the foregoing method embodiments, and the input/output interface 32 is configured to implement a sending and/or receiving-related operation performed by the second RAN in the foregoing method embodiments.

In another solution, the chip system 30 is configured to implement operations performed by the AMF in the foregoing method embodiments.

For example, the logic circuit 31 is configured to implement a processing-related operation performed by the AMF in the foregoing method embodiments, and the input/output interface 32 is configured to implement a sending and/or receiving-related operation performed by the AMF in the foregoing method embodiments.

In another solution, the chip system 30 is configured to implement operations performed by the UDM in the foregoing method embodiments.

For example, the logic circuit 31 is configured to implement a processing-related operation performed by the UDM in the foregoing method embodiments, and the input/output interface 32 is configured to implement a sending and/or receiving-related operation performed by the UDM in the foregoing method embodiments.

An embodiment of this application further provides a computer-readable storage medium. The computer-readable storage medium stores computer instructions for implementing the method performed by the device in the foregoing method embodiments.

For example, when a computer program is executed by a computer, the computer is enabled to implement the method performed by the mobility management network element in the foregoing method embodiments.

For another example, when a computer program is executed by a computer, the computer is enabled to implement the method performed by the terminal device in the foregoing method embodiments.

An embodiment of this application further provides a computer program product, including instructions. When the instructions are executed by a computer, the method performed by the device (for example, the first RAN, the second RAN, the AMF, or the UDM) in the foregoing method embodiments is implemented.

An embodiment of this application further provides a communication system, including the first RA, the second RAN, the AMF, and the UDM.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line (DSL)) or a wireless manner (for example, infrared, radio, or microwave). The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first access network device, a data processing requirement, wherein the data processing requirement indicates a requirement for processing data associated with a user for a specified purpose; and
determining, by the first access network device based on first user consent information and the data processing requirement, whether to process the data associated with the user, wherein
the first user consent information indicates whether the user consents to process the data associated with the user for a plurality of specified data processing purposes, and any one of the plurality of data processing purposes indicates a purpose of processing the data associated with the user.

2. The method according to claim 1, wherein the method further comprises: obtaining, by the first access network device, the first user consent information in response to the data processing requirement.

3. The method according to claim 1, wherein before the obtaining, by a first access network device, a data processing requirement, the method further comprises:
obtaining, by the first access network device, the first user consent information.

4. The method according to claim 2 or 3, wherein before the obtaining, by the first access network device, the first user consent information, the method further comprises:
determining, by the first access network device, that no user consent information associated with the specified purpose exists locally.

5. The method according to any one of claims 2 to 4, wherein the obtaining, by the first access network device, the first user consent information comprises:
sending, by the first access network device, first indication information to a unified data management network element via a mobility management network element, wherein the first indication information indicates to obtain user consent information used by an access network device; and
receiving, by the first access network device, the first user consent information from the mobility management network element, wherein
the user consent information used by the access network device and user information used by a core network device are stored in a unified data management network element, and the user consent information used by the access network device and the user information used by the core network device are two different types of user consent information.

6. The method according to claim 5, wherein the first indication information is 1-bit information, and a value of 1 or 0 indicates to request to obtain the user consent information used by the access network device; or
the first indication information is identification information of a network to which the first access network device belongs, and indicates to request to obtain user consent information used by the first access network device.

7. The method according to claim 5 or 6, wherein the receiving, by the first access network device, the first user consent information from the mobility management network element comprises:
receiving, by the first access network device, an initial user equipment context setup request message from the mobility management network element, wherein the initial user equipment context setup request message comprises the first user consent information;
receiving, by the first access network device, a path switch request message from the mobility management network element, wherein the path switch request message comprises the first user consent information; or
receiving, by the first access network device, a handover request message from the mobility management network element, wherein the handover request message comprises the first user consent information.

8. The method according to any one of claims 2 to 4, wherein the obtaining, by the first access network device, the first user consent information comprises:
receiving, by the first access network device, a handover request message from a second access network device, wherein the handover request message comprises the first user consent information;
receiving, by the first access network device, a user equipment context obtaining response message from a second access network device, wherein the user equipment context obtaining response message comprises the first user consent information;
receiving, by the first access network device, container information from a second access network device, wherein the container information comprises the first user consent information; or
receiving, by the first access network device, a secondary node addition request message from a second access network device, wherein the secondary node addition request message comprises the first user consent information.

9. The method according to any one of claims 1 to 8, wherein the first user consent information comprises the plurality of data processing purposes; and
the determining, by the first access network device based on first user consent information and the data processing requirement, whether to process the data associated with the user comprises:
if the specified purpose belongs to the plurality of data processing purposes, determining, by the first access network device, to process the data associated with the user; or
if the specified purpose does not belong to the plurality of data processing purposes, determining, by the first access network device, not to process the data associated with the user.

10. The method according to any one of claims 1 to 8, wherein the first user consent information comprises the plurality of data processing purposes and a user consent result corresponding to each of the plurality of data processing purposes, and the user consent result indicates whether the user consents to process the data associated with the user for the data processing purpose corresponding to the user consent result; and
the determining, by the first access network device based on first user consent information and the data processing requirement, whether to process the data associated with the user comprises:
if the specified purpose is a first data processing purpose in the plurality of data processing purposes and a user consent result corresponding to the first data processing purpose is "consent", determining, by the first access network device, to process the data associated with the user;
otherwise, determining, by the first access network device, not to process the data associated with the user.

11. The method according to any one of claims 1 to 8, wherein the first user consent information comprises the plurality of data processing purposes and an identifier of a first network, and the identifier of the first network indicates whether the user consents to process, in the first network, the data associated with the user; and
the determining, by the first access network device based on first user consent information and the data processing requirement, whether to process the data associated with the user comprises:
if the specified purpose is one of the plurality of data processing purposes and the first access network device belongs to the first network, determining, by the first access network device, to process the data associated with the user;
otherwise, determining, by the first access network device, not to process the data associated with the user.

12. The method according to any one of claims 1 to 8, wherein the first user consent information comprises the plurality of data processing purposes, a user consent result corresponding to each of the plurality of data processing purposes, and an identifier of a first network, the user consent result indicates whether the user consents to process the data associated with the user for the data processing purpose corresponding to the user consent result, and the identifier of the first network indicates whether the user consents to process, in the first network, the data associated with the user; and
the determining, by the first access network device based on first user consent information and the data processing requirement, whether to process the data associated with the user comprises:
if the specified purpose is a first data processing purpose in the plurality of data processing purposes, a user consent result corresponding to the first data processing purpose is "consent", and the first access network device belongs to the first network, determining, by the first access network device, to process the data associated with the user;
otherwise, determining, by the first access network device, not to process the data associated with the user.

13. The method according to any one of claims 9 to 12, wherein when the first access network device determines not to process the data associated with the user, the method further comprises:
determining, by the first access network device, not to collect data that is associated with the user and that corresponds to the specified purpose;
sending, by the first access network device, a data collection message to a terminal device, wherein the data collection message comprises a non-collection indication, and the non-collection indication indicates that the data that is associated with the user and that corresponds to the specified purpose is not to be collected; and
receiving, by the first access network device, a response message from the terminal device, wherein the response message comprises first data, and the first data does not comprise the data that is associated with the user and that corresponds to the specified purpose.

14. The method according to any one of claims 9 to 13, wherein the obtaining, by a first access network device, a data processing requirement comprises:
receiving, by the first access network device, the data processing requirement from a trigger network element.

15. The method according to claim 14, wherein when the first access network device determines not to process the data associated with the user, the method further comprises:
sending, by the first access network device, a trigger response message in response to a trigger message to the trigger network element, wherein the trigger response message comprises a cause value, and the cause value indicates that user consent is not obtained or the data that is associated with the user and that corresponds to the specified purpose is not collected.

16. The method according to any one of claims 9 to 13, wherein when the first access network device determines to process the data associated with the user, the method further comprises:
sending, by the first access network device, a data collection message to the terminal device, wherein the data collection message is used to obtain the data associated with the user;
receiving, by the first access network device, a response message from the terminal device, wherein the response message comprises the data associated with the user; and
processing, by the first access network device, the data associated with the user for the specified purpose.

17. The method according to any one of claims 1 to 16, wherein the data use purpose comprises access network device data analytics, access network device data model sharing, or non-terrestrial network NTN location query.

18. A communication method, comprising:
obtaining, by a second access network device, second user consent information, wherein the second user consent information indicates whether a user consents to process data associated with the user for a plurality of specified second data processing purposes, and any one of the plurality of second data processing purposes indicates a purpose of processing the data associated with the user;
determining, by the second access network device, first user consent information based on the second user consent information; and
sending, by the second access network device, the first user consent information to a first access network device, wherein the first user consent information indicates whether the user consents to process the data associated with the user for a plurality of specified data processing purposes, and any one of the plurality of data processing purposes indicates a purpose of processing the data associated with the user.

19. The method according to claim 18, wherein the sending, by the second access network device, the first user consent information to a first access network device comprises:
sending, by the second access network device, a handover request message to the first access network device, wherein the handover request message comprises the first user consent information;
sending, by the second access network device, a user equipment context obtaining response message to the first access network device, wherein the user equipment context obtaining response message comprises the first user consent information; or
sending, by the second access network device, container information to the first access network device, wherein the container information comprises the first user consent information; and
sending, by the second access network device, a secondary node addition request message to the first access network device, wherein the secondary node addition request message comprises the first user consent information.

20. The method according to claim 18 or 19, wherein the first user consent information comprises the plurality of data processing purposes and a user consent result corresponding to each of the plurality of data processing purposes, and the user consent result indicates whether the user consents to process the data associated with the user for the data processing purpose corresponding to the user consent result;
the second user consent information comprises the plurality of second data processing purposes, a second user consent result corresponding to each of the plurality of second data processing purposes, and an identifier of a second network, wherein the second user consent result indicates whether the user consents to process the data associated with the user for the data processing purpose corresponding to the second user consent result, and the identifier of the second network indicates whether the user consents to process, in the second network, the data associated with the user; and
the determining, by the second access network device, first user consent information based on the second user consent information comprises:
determining, by the second access network device, that the first access network device does not belong to the second network;
using, by the second access network device, the plurality of second data processing purposes as the plurality of data processing purposes; and
determining, by the second access network device, that a plurality of user consent results respectively corresponding to the plurality of data processing purposes are "non-consent".

21. A communication method, comprising:
receiving, by a unified data management network element, first indication information, wherein the first indication information indicates to obtain user consent information used by an access network device;
determining, by the unified data management network element from subscription data of a user, the user consent information used by the access network device; and
sending, by the unified data management network element, third user consent information, wherein
the subscription data of the user comprises the user consent information used by the access network device and user information used by a core network device, the user consent information used by the access network device and the user information used by the core network device are two different types of user consent information, and the user consent information used by the access network device is the third user consent information, or the user consent information used by the access network device is partial user consent information in the third user consent information; and
the third user consent information indicates whether the user consents to process data associated with the user for a plurality of specified third data processing purposes, and any one of the plurality of third data processing purposes indicates a purpose of processing the data associated with the user.

22. The method according to claim 21, wherein the third user consent information comprises the plurality of third data processing purposes and a third user consent result corresponding to each of the plurality of third data processing purposes, and the third user consent result indicates whether the user consents to process the data associated with the user for the third data processing purpose corresponding to the third user consent result.

23. The method according to claim 22, wherein the third user consent information further comprises an identifier of a third network, and the identifier of the third network indicates whether the user consents to process, in the third network, the data associated with the user.

24. A communication method, comprising:
obtaining, by a second access network device, second user consent information, wherein the second user consent information indicates whether a user consents to process data associated with the user for a plurality of specified second data processing purposes, and any one of the plurality of second data processing purposes indicates a purpose of processing the data associated with the user;
determining, by the second access network device, first user consent information based on the second user consent information; and
sending, by the second access network device, the first user consent information to a first access network device;
obtaining, by the first access network device, a data processing requirement, wherein the data processing requirement indicates a requirement for processing the data associated with the user for a specified purpose; and
determining, by the first access network device based on the first user consent information and the data processing requirement, whether to process the data associated with the user, wherein
the first user consent information indicates whether the user consents to process the data associated with the user for a plurality of specified data processing purposes, and any one of the plurality of data processing purposes indicates a purpose of processing the data associated with the user.

25. The method according to claim 24, wherein the method further comprises:
receiving, by a unified data management network element, first indication information, wherein the first indication information indicates to obtain user consent information used by an access network device;
determining, by the unified data management network element from subscription data of the user, the user consent information used by the access network device; and
sending, by the unified data management network element, third user consent information, wherein
the subscription data of the user comprises the user consent information used by the access network device and user information used by a core network device, the user consent information used by the access network device and the user information used by the core network device are two different types of user consent information, and the user consent information used by the access network device is the third user consent information, or the user consent information used by the access network device is partial user consent information in the third user consent information;
and
the third user consent information indicates whether the user consents to process the data associated with the user for a plurality of specified third data processing purposes, and any one of the plurality of third data processing purposes indicates a purpose of processing the data associated with the user.

26. A communication system, comprising a first access network device and a second access network device, wherein
the second access network device is configured to obtain second user consent information, wherein the second user consent information indicates whether a user consents to process data associated with the user for a plurality of specified second data processing purposes, and any one of the plurality of second data processing purposes indicates a purpose of processing the data associated with the user;
the second access network device is further configured to determine first user consent information based on the second user consent information;
the second access network device is further configured to send the first user consent information to a first access network device;
the first access network device is configured to obtain a data processing requirement, wherein the data processing requirement indicates a requirement for processing the data associated with the user for a specified purpose; and
the first access network device is further configured to determine, based on the first user consent information and the data processing requirement, whether to process the data associated with the user, wherein
the first user consent information indicates whether the user consents to process the data associated with the user for a plurality of specified data processing purposes, and any one of the plurality of data processing purposes indicates a purpose of processing the data associated with the user.

27. The system according to claim 26, further comprising a unified data management network element, wherein
the unified data management network element is configured to receive first indication information, wherein the first indication information indicates to obtain user consent information used by an access network device;
the unified data management network element is further configured to determine, from subscription data of the user, the user consent information used by the access network device; and
the unified data management network element is further configured to send third user consent information, wherein
the subscription data of the user comprises the user consent information used by the access network device and user information used by a core network device, the user consent information used by the access network device and the user information used by the core network device are two different types of user consent information, and the user consent information used by the access network device is the third user consent information, or the user consent information used by the access network device is partial user consent information in the third user consent information; and
the third user consent information indicates whether the user consents to process the data associated with the user for a plurality of specified third data processing purposes, and any one of the plurality of third data processing purposes indicates a purpose of processing the data associated with the user.

28. A communication apparatus, wherein the apparatus comprises a module configured to perform the method according to any one of claims 1 to 17.

29. A communication apparatus, wherein the apparatus comprises a module configured to perform the method according to any one of claims 18 to 20.

30. A communication apparatus, wherein the apparatus comprises a module configured to perform the method according to any one of claims 21 to 23.

31. A communication apparatus, comprising:
a memory, configured to store a computer program; and
a processor, configured to execute the computer program stored in the memory, to enable the communication apparatus to perform the method according to any one of claims 1 to 23.

32. A computer-readable storage medium, wherein the computer-readable storage medium stores computer instructions, and when the computer instructions are run on a computer, the method according to any one of claims 1 to 23 is performed.

33. A computer program product, wherein the computer program product comprises instructions for performing the method according to any one of claims 1 to 23.
